(19) **Europäisches Patentamt / European Patent Office / Office européen des brevets**

(11) **EP 2 956 799 B1**

(12) **EUROPÄISCHE PATENTSCHRIFT**

(45) Veröffentlichungstag und Bekanntmachung des Hinweises auf die Patenterteilung:
**05.09.2018  Patentblatt 2018/36**

(21) Anmeldenummer: **14700979.9**

(22) Anmeldetag: **14.01.2014**

(51) Int Cl.:
*G01S 17/00* (2006.01)   *G01S 17/93* (2006.01)
*B60Q 1/00* (2006.01)   *B60Q 1/04* (2006.01)
*G01S 17/46* (2006.01)   *G01S 17/10* (2006.01)
*G01S 17/32* (2006.01)   *G01S 17/36* (2006.01)
*G01S 17/58* (2006.01)   *G01S 7/481* (2006.01)
*G01S 13/93* (2006.01)

(86) Internationale Anmeldenummer:
**PCT/EP2014/050537**

(87) Internationale Veröffentlichungsnummer:
**WO 2014/124768 (21.08.2014 Gazette 2014/34)**

(54) **BESTIMMUNG EINER ENTFERNUNGSINFORMATION FÜR EIN FAHRZEUG**

DETERMINING DISTANCE INFORMATION FOR A VEHICLE

DÉTERMINATION D'UNE INFORMATION DE DISTANCE POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2013   DE 102013002650**

(43) Veröffentlichungstag der Anmeldung:
**23.12.2015   Patentblatt 2015/52**

(73) Patentinhaber: **Volkswagen Aktiengesellschaft 38440 Wolfsburg (DE)**

(72) Erfinder:
• **WOHLENBERG, Stefan**
  **38114 Braunschweig (DE)**
• **MEINECKE, Marc-Michael**
  **38524 Sassenburg (DE)**
• **RUCHATZ, Thomas**
  **38542 Leiferde (DE)**
• **EFFERTZ, Jan**
  **38273 Sickte (DE)**

(56) Entgegenhaltungen:
EP-A1- 1 162 478   WO-A1-2008/154736
DE-A1- 19 707 936   US-A1- 2008 237 445

**Beschreibung**

Die vorliegende Erfindung betrifft ein Verfahren für ein Fahrzeug, insbesondere ein Verfahren zum Bestimmen einer Entfernung zu einem Objekt in einer Umgebung des Fahrzeugs, sowie eine entsprechende Vorrichtung.

In modernen Fahrzeugen, wie zum Beispiel Personenkraftwagen oder Lastkraftwagen, wird eine Vielzahl von so genannten Fahrerassistenzsystemen eingesetzt, um einen Fahrer des Fahrzeugs bei dem Führen des Fahrzeugs zu unterstützen. Derartige Fahrerassistenzsysteme können beispielsweise dazu beitragen, Unfälle zu vermeiden, und den Fahrer entlasten, wodurch ein Komfort für den Fahrer erhöht werden kann. Beispielsweise kann eine adaptive Geschwindigkeitsregelungsanlage automatisch einen geeigneten Abstand zu einem vorausfahrenden Fahrzeug einhalten. Einparkhilfen können einen Fahrer beim Ein- und Ausparken unterstützen. Weitere Assistenzsysteme können beispielsweise einen toten Winkel überwachen und Notbremsungen oder Steuereingriffe in Abhängigkeit von einer Verkehrssituation durchführen. Zur Erfassung einer aktuellen Verkehrssituation in einer Umgebung des Fahrzeugs sind daher Objekterfassungssysteme erforderlich. Übliche Objekterfassungssysteme verwenden Technologien wie zum Beispiel Radar, Lidar, Ultraschall oder eine automatische Bildverarbeitung. Dadurch können zusätzliche Kosten für entsprechende Sensoren entstehen. Darüber hinaus sind derartige Sensoren an geeigneten Stellen des Fahrzeugs unterzubringen, wodurch zusätzlicher Bauraum für diese Sensoren benötigt wird.

In diesem Zusammenhang wird in der WO 2008/154736 A1 ein Beleuchtungssystem mit Fahrerassistenzfähigkeiten offenbart. Dazu werden Fahrzeugbeleuchtungsmodulen, wie zum Beispiel Frontscheinwerfern, Rückleuchten, Bremsleuchten und Innenleuchten, zusätzliche Erfassungsfähigkeiten hinzugefügt, um das Vorhandensein von Hindernissen, wie zum Beispiel Automobilen, Lastkraftwagen, Fußgängern und anderen Objekten, zu erkennen oder die Geschwindigkeit dieser Hindernisse zu messen. Diese Erfassungsfähigkeiten werden Fahrerassistenzanwendungen, wie zum Beispiel einer adaptiven Geschwindigkeitssteuerung, einer toten Winkel Überwachung und einem Pre-Crash-Assistenten zur Verfügung gestellt. Eine Leuchtdiode (LED) weist die Fähigkeit auf, einerseits als Beleuchtungsquelle für eine Beleuchtung verwendet zu werden und andererseits als Quelle für das Erfassungssystem gepulst oder moduliert zu werden.

Die EP 1 162 478 A1 betrifft ein Annäherungswarnsystem zum Warnen vor einer Annäherung eines Hindernisses innerhalb einer relevanten Zone in einer Umgebung eines Fahrzeugs. Das System umfasst einen Sensor, welcher ausgestaltet ist, eine Strahlung von zumindest einem Teil der relevanten Zone zu empfangen. Der Sensor ist ausgestaltet, eine Ausgabe zu erzeugen, welche eine Menge einer elektromagnetischen Strahlung anzeigt, welche auf den Sensor einfällt. Das System weist ferner ein Mittel zum Erzeugen einer Kompensationsausgabe auf, welche eine Menge von elektromagnetischer Hintergrundstrahlung anzeigt, welche auf den Sensor einfällt. Ein Sender ist ausgestaltet, ein elektromagnetisches Signal in Richtung der relevanten Zone zusenden. Durch Einstellen der Sendeleistung des elektromagnetischen Signals gemäß der gemessenen Menge von Hintergrundstrahlung kann eine Hochenergiestrahlung ausschließlich dann verwendet werden, wenn sie aufgrund der Beleuchtungsverhältnisse benötigt wird.

Die US 2008/0237445 A1 betrifft eine Vorrichtung für eine Entfernungsmessung. Die Vorrichtung umfasst eine Lichtquelle, eine Halbleiterkamera, eine Steuerung und einen Distanzdatengenerator. Die Lichtquelle kann ausgestaltet sein, ein moduliertes Licht in Richtung eines Objekts auszusenden, und die Halbleiterkamera kann das von dem Objekt reflektierte Licht in Ladungen umwandeln. Der Distanzdatengenerator kann ausgestaltet sein, die Entfernung auf der Grundlage der Ladungen zu berechnen, und die Steuerung kann ausgestaltet sein, dass modulierte Licht einzustellen, um unter verschiedenen Gegebenheiten vorteilhaft zu sein.

Die DE 197 07 936 A1 betrifft eine Vorrichtung zum Bestimmen eines Abstandes eines Hindernisses zu einem Fahrzeug mit einem optischen Abstandssensor. Für eine Erhöhung der Augensicherheit ist vorgesehen, dass eine Sendeleistung einer Sendeeinrichtung der Vorrichtung fahrgeschwindigkeitsabhängig gesteuert wird.

Aufgabe der vorliegenden Erfindung ist es, eine verbesserte Entfernungs- oder Geschwindigkeitsmessung für ein Objekt in einer Umgebung des Fahrzeugs oder für mehrere Objekte in der Umgebung des Fahrzeugs bereitzustellen.

Diese Aufgabe wird gemäß der vorliegenden Erfindung durch ein Verfahren für ein Fahrzeug nach Anspruch 1, eine Vorrichtung zur Bestimmung einer Entfernungsinformation für ein Fahrzeug nach Anspruch 7 und ein Fahrzeug nach Anspruch 9 gelöst. Die abhängigen Ansprüche definieren bevorzugte und vorteilhafte Ausführungsformen der Erfindung.

Gemäß der vorliegenden Erfindung wird ein Verfahren für ein Fahrzeug bereitgestellt, bei welchem ein Betriebszustand des Fahrzeugs erfasst wird. Der Betriebszustand des Fahrzeugs umfasst einen Sollzustand für eine Beleuchtungseinrichtung des Fahrzeugs. Der Sollzustand für die Beleuchtungseinrichtung zeigt an, ob die Beleuchtungseinrichtung eingeschaltet oder ausgeschaltet sein soll. In Abhängigkeit von dem Betriebszustand wird ein moduliertes Signal erzeugt und mit diesem modulierten Signal eine Beleuchtungseinrichtung des Fahrzeugs angesteuert. Die Beleuchtungseinrichtung des Fahrzeugs ist zum Beleuchten einer Szene in einer Umgebung des Fahrzeugs oder innerhalb des Fahrzeugs ausgestaltet. Die Beleuchtungseinrichtung kann beispielsweise ein Tagfahrlicht, ein Abblendlicht, ein Fernlicht, einen Nebelscheinwerfer, eine Blinkerleuchte, einen Rückfahrscheinwerfer, eine Nebelschlussleuchte, eine Bremsleuchte oder eine Rückleuchte des Fahrzeugs umfassen. Licht, welches von der Beleuchtungseinrichtung abgegeben wurde und von einem Objekt in der Szene reflektiert wurde, wird empfangen und in Abhängigkeit von dem empfangenen Licht wird ein Empfangssignal erzeugt. Das Licht kann beispielsweise mit einem Sensor des Fahrzeugs empfangen werden. In Abhängigkeit von dem modulierten Signal und dem Empfangssignal wird eine Entfernungsinformation des Objekts, beispielsweise ein Abstand des Objekts zu dem Fahrzeug, bestimmt. Indem die Beleuchtungseinrichtung des Fahrzeugs nicht nur zur Beleuchtung der Umgebung, sondern auch zur Entfernungsmessung verwendet wird, können Kosten des Fahrzeugs verringert werden und eine kostengünstige Entfernungsmessung realisiert werden. Indem bei der Erzeugung des modulierten Signals der Betriebszustand des Fahrzeugs berücksichtigt wird, kann die Beleuchtungseinrichtung so moduliert werden, dass weder die Beleuchtungsfunktion der Beleuchtungseinrichtung noch das äußere Erscheinungsbild der Beleuchtungseinrichtung oder des gesamten Fahrzeugs beeinträchtigt werden. Ziel ist es beispielsweise, dass ein Beobachter von außen nicht erkennen können soll, dass die Beleuchtungseinrichtung des Fahrzeugs für die Entfernungsmessung verwendet wird. Wenn die Beleuchtungseinrichtung beispielsweise ausgeschaltet sein soll, können kurze Lichtimpulse zur Entfernungsmessung ausgesendet werden, wobei die Lichtmenge so gering ist, dass sie von einem menschlichen Betrachter nicht gesehen werden kann. Eine Lichtmenge, welche von einem menschlichen Betrachter nicht gesehen werden kann, hängt stark von der Beleuchtung und von einem Kontrast in der Sendeebene ab. Es können tagsüber erheblich größere Lichtmengen abgestrahlt werden, ohne gesehen zu werden, als nachts. Die Beleuchtungseinrichtung kann vorzugsweise Leuchtdioden umfassen, bei welchen ein blauer Lichtanteil als Modulationsträger genutzt wird. Dieser kann hochfrequent moduliert werden und bleibt im Spektrum der weißen Leuchtdioden bestehen. Die Leuchtdioden können eine Phosphorbeschichtung umfassen, welche Teile des blauen Lichts in anders farbiges Licht umwandelt. Die Phosphorbeschichtung der Leuchtdioden kann der schnellen Modulation nicht folgen, da sie im Allgemeinen zu träge ist. So entsteht ein für die menschliche Wahrnehmung weißes gleichmäßig leuchtendes Licht, während dessen Blauanteil die notwendige Modulation aufweist.

Das modulierte Signal wird in Abhängigkeit von dem Sollzustand für die Beleuchtungseinrichtung erzeugt, welcher anzeigt, ob die Beleuchtungseinrichtung eingeschaltet sein soll oder ausgeschaltet sein soll. Ein erstes moduliertes Signal wird erzeugt, wenn der Sollzustand anzeigt, dass die Beleuchtungseinrichtung eingeschaltet sein soll, und ein zweites moduliertes Signal wird erzeugt, wenn der Sollzustand anzeigt, dass die Beleuchtungseinrichtung ausgeschaltet sein soll. Das erste modulierte Signal entspricht dem invertierten zweiten modulierten Signal. Wenn die Beleuchtungseinrichtung ausgeschaltet sein soll, können beispielsweise kurze Lichtimpulse für die Entfernungsmessung verwendet werden, welche eine so geringe mittlere Lichtleistung haben, dass ein Beobachter diese Lichtmenge nicht oder kaum wahrnehmen kann. Umgekehrt, wenn die Beleuchtungseinrichtung eingeschaltet sein soll, kann ein moduliertes Signal erzeugt werden, welches kurze ausgeschaltete Zeitabschnitte, quasi "negative Impulse", umfasst und somit durch Invertieren des zuvor beschriebenen Signals gebildet werden kann. Die "negativen Lichtpulse" können wiederum hinreichend kurz sein, dass ein Beobachter nicht bemerkt, dass das Licht der Beleuchtungseinrichtung kurzzeitig ausgeschaltet wird.

Gemäß einer weiteren Ausführungsform kann eine weitere Beleuchtungseinrichtung des Fahrzeugs in Abhängigkeit von dem Betriebszustand und dem modulierten Signal angesteuert werden. Wenn beispielsweise das Fahrzeug bei Dunkelheit fährt und das Fernlicht eingeschaltet ist, kann das Fernlicht durch. kurzzeitiges Absenken der Helligkeit moduliert werden und somit eine große Messreichweite zur Entfernungsbestimmung ermöglicht werden. Wenn ein weiteres Fahrzeug von vorne entgegenkommt, kann das Fernlicht nicht weiter verwendet werden, weil sonst ein Fahrer des entgegenkommenden Fahrzeugs geblendet werden könnte. In diesem Fall können die Leuchtdioden des Abblendlichts durch kurzzeitiges Absenken der Helligkeit kontinuierlich die Entfernung messen und zusätzlich können Leuchtdioden des Fernlichts durch kurzzeitiges Pulsen des Lichts die Entfernung messen, ohne den Fahrer des entgegenkommenden Fahrzeugs zu blenden. Anders ausgedrückt ist ein Bereich der Leuchtdioden kurzzeitig eingeschaltet (Fernlicht) und ein anderer Bereich kurzzeitig ausgeschaltet (Abblendlicht). Dadurch kann eine große Messreichweite ermöglicht werden, ohne dass die Leuchtdioden des Fernlichts den Fahrer des entgegenkommenden Fahrzeugs blenden oder stören.

Gemäß einer weiteren Ausführungsform wird beim Erzeugen des modulierten Signals eine Durchschnittsleistung des modulierten Signals in Abhängigkeit von dem Betriebszustand des Fahrzeugs, beispielsweise in Abhängigkeit von der Umgebungshelligkeit, eingestellt. Da die Lichtmenge, welche von einem Beobachter nicht bemerkt wird, stark von der Beleuchtung und vom Kontrast in der Umgebung abhängt, können tagsüber erheblich größere Lichtmengen abgestrahlt werden als nachts, ohne dass diese bemerkt werden. Weiterhin ist tagsüber das Signal-zu-Rausch-Verhältnis durch das Störlicht der Sonne schlechter als nachts, so dass höhere Sendeleistungen notwendig sind. Durch Einstellen der Durchschnittsleistung des modulierten Signals in Abhängigkeit von dem Betriebszustand können diese Umstände berücksichtigt werden.

Das kaum oder nicht bemerkbare Modulieren der Beleuchtungseinrichtung kann insbesondere mit einem pulsmodulierten Signal durchgeführt werden. Beispielsweise kann das pulsmodulierte Signal eine Pulsdauer im Bereich von 1 bis 500 ns, vorzugsweise 10 bis 100 ns, aufweisen und eine Frequenz im Bereich von 1-1000 Hz, vorzugsweise 10-100 Hz, haben. Somit können Entfernungsinformationen in kurzer Zeit und mit großer Häufigkeit für beispielsweise ein Fahrerassistenzsystem, wie z.B. eine adaptive Geschwindigkeitsregelungsanlage oder einen Bremsassistenten, bereitgestellt werden.

Erfindungsgemäß wird weiterhin eine Vorrichtung zur Bestimmung einer Entfernungsinformation für ein Fahrzeug bereitgestellt. Die Vorrichtung umfasst einen Sensor zum Empfangen von Licht, welches von einer Beleuchtungseinrichtung des Fahrzeugs abgegeben wurde und von einem Objekt in einer Szene in einer Umgebung des Fahrzeugs oder innerhalb des Fahrzeugs reflektiert wurde. Der Sensor dient ferner zum Erzeugen eines Empfangssignals in Abhängigkeit von dem empfangenen Licht. Die Vorrichtung umfasst weiterhin eine Verarbeitungseinheit, welche einen Betriebszustand des Fahrzeugs erfasst und in Abhängigkeit von dem Betriebszustand ein moduliertes Signal erzeugt. Mit dem modulierten Signal steuert die Verarbeitungseinheit die Beleuchtungseinrichtung des Fahrzeugs an, wodurch die Szene mit Hilfe der Beleuchtungseinrichtung ausgeleuchtet wird. In Abhängigkeit von dem modulierten Signal und dem Empfangssignal von dem Sensor bestimmt die Verarbeitungseinheit eine Entfernungsinformation des Objekts, beispielsweise einen Abstand zwischen dem Fahrzeug und dem Objekt. Das modulierte Signal kann beispielsweise mit einem frequenzmodulierten Dauerstrichverfahren, einem zufälligen Frequenzmodulationsverfahren, einem Einfrequenzmodulationsverfahren oder einem Pulsmodulationsverfahren erzeugt werden. Bei dem frequenzmodulierten Dauerstrichverfahren wird eine Modulationsfrequenz über eine bestimmte Zeit von einer Anfangsfrequenz zu einer Endfrequenz geändert. Bei dem zufälligen Frequenzmodulationsverfahren wird eine Modulationsfrequenz zufällig geändert und bei dem Einfrequenzmodulationsverfahren wird eine konstante Modulationsfrequenz verwendet. Zur Entfernungsbestimmung kann beispielsweise ein Korrelationsverfahren oder ein Frequenzmischverfahren verwendet werden, in welchem das Modulationssignal und das Empfangssignal miteinander kombiniert werden. Die Vorrichtung kann zur Durchführung des zuvor beschriebenen Verfahrens oder einer der zuvor beschriebenen Ausführungsformen ausgestaltet sein und umfasst daher auch die zuvor beschriebenen Vorteile. Vorzugsweise umfasst die Beleuchtungseinrichtung Leuchtdioden, welche eine Lichterzeugung mit geeignet hohen Modulationsfrequenzen im Bereich bis zu beispielsweise 200 MHz und eine Lichterzeugung mit hinreichend kurzen Pulsen im Bereich von wenigen Nanosekunden, beispielsweise bis zu 10 ns, ermöglichen.

Schließlich wird gemäß der vorliegenden Erfindung ein Fahrzeug bereitgestellt, welches die zuvor beschriebene Vorrichtung, eine Beleuchtungseinrichtung, wie z.B. ein Tagfahrlicht, ein Abblendlicht, eine Blinkerleuchte, ein Rücklicht, ein Fernlicht oder eine Rückfahrleuchte, und ein Fahrerassistenzsystem umfasst. Die Vorrichtung ist mit dem Fahrerassistenzsystem und der Beleuchtungseinrichtung gekoppelt und überträgt die bestimmte Entfernungsinformation zu dem Fahrerassistenzsystem.

Die vorliegende Erfindung wird nachfolgend unter Bezugnahme auf die Zeichnung im Detail beschrieben werden.

Fig. 1 zeigt schematisch ein Fahrzeug gemäß einer Ausführungsform der vorliegenden Erfindung und ein Objekt in einer Umgebung des Fahrzeugs.

Fig. 2 zeigt Schritte eines Verfahrens zur Bestimmung einer Entfernung zu einem Objekt gemäß einer Ausführungsform der vorliegenden Erfindung.

Fig. 3 zeigt Schritte eines Verfahrens zur Bestimmung einer Geschwindigkeit eines Objekts gemäß einer Ausführungsform der vorliegenden Erfindung.

Fig. 4 zeigt schematisch eine Schaltung einer Leuchtdiodenlichtquelle gemäß einer Ausführungsform der vorliegenden Erfindung, welche zum Aussenden von Licht für eine Entfernungsmessung ausgestaltet ist.

Fig. 5 zeigt schematisch die Anordnung von Komponenten der Leuchtdiodenlichtquelle der Fig. 4 in einem gemeinsamen Halbleitergehäuse.

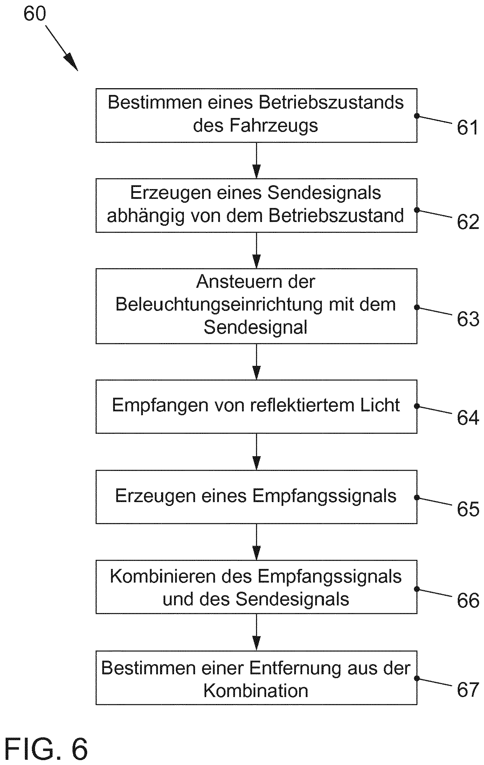

Fig. 6 zeigt Schritte eines Verfahrens zur Bestimmung einer Entfernung eines Objekts gemäß einer weiteren Ausführungsform der vorliegenden Erfindung.

Fig. 7 zeigt erste Erfassungsbereiche von Sensoren einer Vorrichtung zur Bestimmung der Position eines Objekts gemäß einer Ausführungsform der vorliegenden Erfindung.

Fig. 8 zeigt zweite Erfassungsbereiche von Sensoren einer Vorrichtung zur Bestimmung einer Position eines Objekts.

Fig. 9 zeigt eine Überlagerung der ersten und zweiten Erfassungsbereiche der Fig. 7 und 8, wie sie von Sensoren einer Vorrichtung zur Bestimmung einer Position eines Objekts gemäß einer Ausführungsform der vorliegenden Erfindung erfasst werden.

Fig. 10 zeigt die zweiten Erfassungsbereiche der Fig. 8 mit einer zusätzlichen Unschärfe.

Fig. 11 zeigt die Überlagerung der ersten und zweiten Erfassungsbereiche der Fig. 9 mit einer zusätzlichen Unschärfe der zweiten Erfassungsbereiche.

Fig. 12 zeigt Sendersegmente, wie sie von einer Lichtquelle einer Vorrichtung gemäß einer Ausführungsform der vorliegenden Erfindung zur Erfassung einer Position eines Objekts verwendet werden.

Fig. 13 zeigt Empfängersegmente, wie sie von Sensoren einer Vorrichtung gemäß einer Ausführungsform der vorliegenden Erfindung zur Bestimmung einer Position eines Objekts verwendet werden.

Fig. 14 zeigt eine Überlagerung der Sendersegmente der Fig. 12 und der Empfängersegmente der Fig. 13.

Fig. 15 zeigt eine Nahfeldansicht von Sendersegmenten, welche gemäß einer Ausführungsform der vorliegenden Erfindung durch eine versetzte Anordnung von Sendedioden erzeugt werden.

Fig. 16 zeigt eine Fernfeldansicht der Sendersegmente der Fig. 15.

Fig. 17 zeigt Verfahrensschritte eines weiteren Verfahrens zur Bestimmung von Entfernungsinformationen gemäß einer Ausführungsform der vorliegenden Erfindung.

Fig. 18 zeigt eine Szene mit einem Objekt in einer Umgebung eines Fahrzeugs.

Fig. 19 zeigt Entfernungshistogramme von Zeilen der Szene der Fig. 18.

Fig. 20 zeigt Entfernungshistogramme von Spalten der Szene der Fig. 18.

Fig. 21 zeigt ein Fahrzeug gemäß einer Ausführungsform der vorliegenden Erfindung, welches gleichzeitig eine Entfernung zu einem vorausfahrenden Fahrzeug misst und Daten überträgt.

Fig. 22 zeigt Schritte eines Verfahrens gemäß einer Ausführungsform der vorliegenden Erfindung zur Bestimmung einer Entfernung eines Objekts und zum Übertragen von Sendedaten.

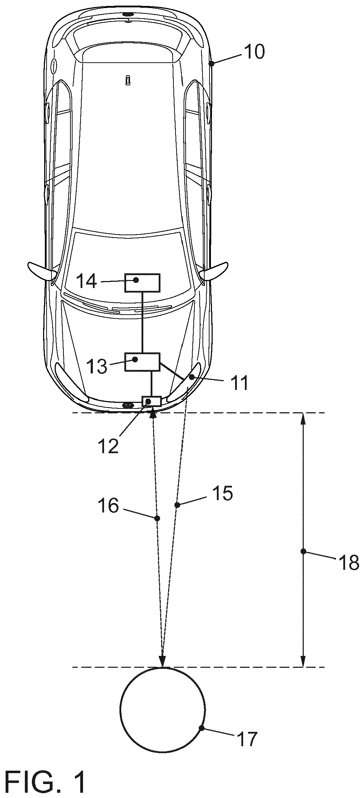

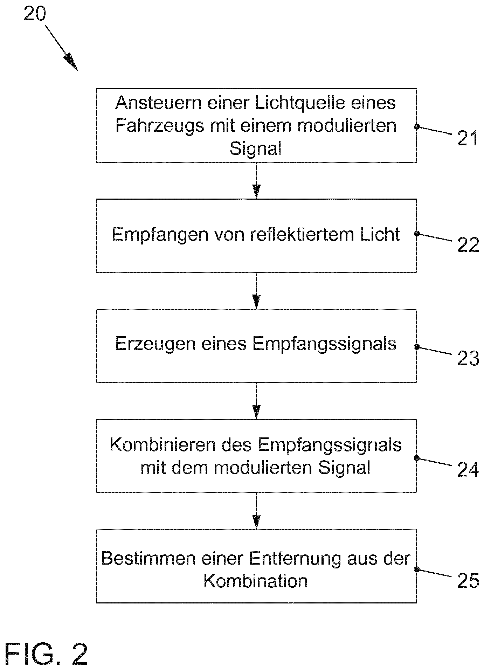

Fig. 1 zeigt ein Fahrzeug 10 mit einer Vorrichtung zur Bestimmung einer Entfernungsinformation. Die Vorrichtung umfasst eine Lichtquelle 11, welche zum Beleuchten eines Objekts 17 in einer Umgebung des Fahrzeugs 10 ausgestaltet ist. Die Lichtquelle 11 kann beispielsweise ein Tagfahrlicht, ein Abblendlicht, eine Blinkerleuchte, ein Rücklicht, ein Fernlicht, einen Nebelscheinwerfer, oder eine Rückfahrleuchte des Fahrzeugs 10 umfassen. Die Lichtquelle kann ferner eine oder mehrere Leuchtdioden umfassen, welche Licht zur Ausleuchtung der Umgebung des Fahrzeugs 10 oder ein Signalisierungslicht, z.B. das Licht einer Blinkerleuchte oder einer Bremsleuchte, erzeugen. Die Lichtquelle 11 kann darüber hinaus auch eine Beleuchtungseinrichtung zum Beleuchten eines Innenraums des Fahrzeugs 10 umfassen, wie z.B. eine Armaturenbrettbeleuchtung, oder eine Fahrgastraumbeleuchtung. Die Vorrichtung zur Bestimmung der Entfernungsinformation umfasst ferner einen optischen Sensor 12 zum Empfangen von von dem Objekt 17 reflektiertem Licht und eine Verarbeitungseinheit 13, welche mit der Lichtquelle 11 und dem Sensor 12 gekoppelt ist. Wenn sich bei der in Fig. 1 gezeigten Anordnung das Objekt 17 beispielsweise in einer Entfernung 18 im Bereich vor dem Fahrzeug 10 befindet, wird Licht 15, welches von der Lichtquelle 11 ausgesendet wurde, von dem Objekt 17 reflektiert und als reflektiertes Licht 16 von dem Sensor 12 empfangen. Die Arbeitsweise der Vorrichtung zur Bestimmung einer Entfernungsinformation wird nachfolgend unter Bezugnahme auf Fig. 2 beschrieben.

Fig. 2 zeigt ein Verfahren 20 für das Fahrzeug 10 zum Bestimmen der Entfernung 18 zwischen dem Fahrzeug 10 und dem Objekt 17. Im Schritt 21 wird die Lichtquelle 11 des Fahrzeugs 10 mit einem modulierten Signal an gesteuert. Das modulierte Signal wird von der Verarbeitungseinheit 13 erzeugt. Das Licht 15, welches von der Lichtquelle 11 abgegeben wurde, wird von dem Objekt 17 reflektiert und als reflektiertes Licht 16 von dem Sensor 12 empfangen (Schritt 22). Im Schritt 23 wird ein Empfangssignal in Abhängigkeit von dem empfangenen reflektierten Licht 16 erzeugt. Das Empfangssignal kann beispielsweise ein analoges oder digitales elektrisches Signal umfassen. Im Schritt 24 wird das Empfangssignal mit dem modulierten Signal in der Verarbeitungseinheit 13 kombiniert. Beispielsweise können das modulierte Signal und das Empfangssignal korreliert werden oder gemischt werden, wie es nachfolgend im Detail beschrieben werden wird. Die Entfernung 18 zu dem Objekt 17 wird im Schritt 25 aus einem Kombinationssignal, beispielsweise einem Korrelationssignal oder einem Mischsignal bestimmt. Die so bestimmte Entfernung zu dem Objekt 17 kann beispielsweise einem Fahrerassistenzsystem 14 des Fahrzeugs 10 bereitgestellt werden. Das Fahrerassistenzsystem 14 kann beispielsweise eine adaptive Geschwindigkeitsregelungsanlage, ein Bremsassistenzsystem, ein Einparkhilfesystem oder ein Kollisionswarnsystem umfassen. Das Objekt 17 kann sich auch im Innenraum des Fahrzeugs 10 befinden und von einer entsprechenden Beleuchtungseinrichtung des Fahrzeugs im Innenraum beleuchtet werden und mit einem entsprechendem Sensor das reflektierte Licht von dem Objekt empfangen werden. Dadurch können Entfernungen zu Objekten im Innenraum des Fahrzeugs bestimmt werden, beispielsweise um Gesten eines Bediensystems zu erkennen oder um beispielsweise bei einem Unfall eine aktuelle Position eines Kopfes eines Insassen zu erfassen, um entsprechende Schutzmechanismen, wie z.B. Airbags, auszulösen.

Damit das zuvor beschriebene Verfahren im Fahrzeug für unterschiedliche Fahrerassistenzsysteme verwendet werden kann, kann es notwendig sein, für die unterschiedlichen Anwendungsfälle unterschiedliche Sende- und Empfangsverfahren zu verwenden. Diese Verfahren können beispielsweise je nach benötigter Entfernung oder Anwendung ausgewählt werden. Dazu kann beispielsweise ein Betriebszustand des Fahrzeugs 10 bestimmt werden und ein entsprechendes Sende- und Empfangsverfahren in Abhängigkeit von dem Betriebszustand des Fahrzeugs ausgewählt werden, d.h. ein entsprechendes Modulationsverfahren zum Erzeugen des modulierten Signals und ein entsprechendes Auswerteverfahren (z.B. Mischen oder Korrelieren) werden in Abhängigkeit von dem Betriebszustand ausgewählt. Das Modulationsverfahren kann beispielsweise ein frequenzmoduliertes Dauerstrichverfahren, ein zufälliges Frequenzmodulationsverfahren, ein Einfrequenzmodulationsverfahren oder ein Pulsmodulationsverfahren umfassen. Diese Verfahren werden nachfolgend im Detail beschrieben werden. Der Betriebszustand des Fahrzeugs kann beispielsweise eine Geschwindigkeit des Fahrzeugs, einen Aktivierungszustand einer Lichtquelle des Fahrzeugs, welche anzeigt, ob die Lichtquelle zum Beleuchten einer Umgebung des Fahrzeugs oder zum Ausgeben eines optischen Signals eingeschaltet ist oder nicht, eine Fahrtrichtung des Fahrzeugs, eine zuvor bestimmte Positionsinformation oder Entfernungsinformation eines Objekts in der Umgebung des Fahrzeugs, Witterungsbedingungen in der Umgebung des Fahrzeugs oder eine Art einer Assistenzvorrichtung des Fahrzeugs, welcher die Entfernungsinformation bereitgestellt wird, umfassen.

Bei dem frequenzmodulierten Dauerstrichverfahren, welches auch als FMCW (Frequency Modulated Continuous Wave) oder auch als Chirp-Verfahren bezeichnet wird, wird eine Modulationsfrequenz über eine bestimmte Zeit von einer Anfangsfrequenz zu einer Endfrequenz geändert. Vorzugsweise wird die Modulationsfrequenz kontinuierlich von der Anfangsfrequenz zu der Endfrequenz geändert. Das Verfahren kann, wie später gezeigt werden wird, nicht nur zur Entfernungsmessung, sondern auch für eine Geschwindigkeitsmessung des Objekts 17 verwendet werden. Die Erzeugung von Modulationssignalen, bei welchen eine Modulationsfrequenz über eine bestimmte Zeit kontinuierlich von einer Anfangsfrequenz zu einer Endfrequenz geändert wird, ist in dem Stand der Technik bekannt und daher kann das Verfahren einfach implementiert werden, beispielsweise indem eine synthetisch erzeugte Wellenform ausgetastet wird. Mit dem Verfahren kann die Entfernung 18 zu dem Objekt 17 kontinuierlich gemessen werden, wodurch das Verfahren besonders für Lichtquellen 11 geeignet ist, welche kontinuierlich eingeschaltet sind. Durch das kontinuierliche Ändern der Modulationsfrequenz und somit der Sendefrequenz der Lichtquelle 11 von einer Anfangsfrequenz zu einer Endfrequenz ergibt sich eine Frequenzrampe. Durch Mischen des Sendesignals mit dem Empfangssignal, welches von dem Sensor 12 empfangen wird, können sowohl der Abstand 18 als auch die Geschwindigkeit des Objekts 17 direkt gemessen werden. Bei der Verwendung von Leuchtdioden (LED) als Lichtquelle 11, welche typische Ansprechzeiten von 5-10 nsec aufweisen, können Modulationsfrequenzen bis beispielsweise maximal 100 MHz genutzt werden. Die FMCW-Modulation kann somit beispielsweise die Sendefrequenz von 10 MHz bis 100 MHz kontinuierlich über einen Zeitraum von beispielsweise 0,5-400 µsec verwenden. Die Entfernungsmessung kann bei Verwendung des frequenzmodulierten Dauerstrichverfahrens (FMCW) wahlweise mittels einer Frequenzmischung oder eines Korrelationsverfahrens erfolgen.

Bei der Verwendung des frequenzmodulierten Dauerstrichverfahrens können das Sende- und das Empfangssignal mit einem Frequenzmischer verglichen werden. Ein Objekt in einer bestimmten Entfernung erzeugt eine Mischfrequenz, welche proportional zu der Entfernung ist. Die Ortsauflösung von mehreren Objekten ist eine Funktion der Auflösung der Frequenzmessung und damit der Messzeit. Ein derartiges Frequenzmischverfahren kann beispielsweise als eine analoge Schaltung in einem integrierten Schaltkreis realisiert werden. Wenn beispielsweise eine Entfernung zwischen 0 m und 40 m gemessen werden soll, braucht das Licht für diese Entfernung hin und zurück entlang der Pfeile 15 und 16 der Fig. 1 circa 3,3 nsec/m x 40 m x 2 = 264 nsec. Daraus ergibt sich eine nützliche Signallänge für das FMCW-Signal von ca. 500 nsec. Eine Modulation bis herunter auf 10 MHz für dieses Verfahren ist daher zu gering, so dass vorzugsweise ein Frequenzhub zwischen 50 und 100 MHz verwendet werden sollte, welcher über 500 nsec linear verändert wird. Bei einer Entfernung 18 von beispielsweise 25 m zwischen dem Fahrzeug 10 und dem Objekt 17 wird das Empfangssignal gegenüber dem Sendesignal um 165 nsec verzögert. Wie zuvor beschrieben, weist das Sendesignal durch die Modulation einen Frequenzhub von 50 MHz/500 nsec = 100 kHz/nsec auf. Bei einer Signalverzögerung des Empfangssignals von 165 nsec hat das Empfangssignal eine um 16,5 MHz niedrigere Frequenz als das Sendesignal. Durch Mischen des Sendesignals mit dem Empfangssignal erhält man bei der Beispieldistanz von 25 m eine Frequenz von 16,5 MHz. Allgemein ausgedrückt ergibt sich durch das Mischen eine Frequenz von 0,66 MHz pro Meter Abstand.

Bei der Entfernungsmessung mittels des frequenzmodulierten Dauerstrichverfahrens können das Sendesignal und das Empfangssignal auch miteinander korreliert werden, um auf der Grundlage eines so erzeugten Korrelationssignals die Entfernung zu dem Objekt 17 zu bestimmen. Dazu wird das modulierte Signal, welches ausgesendet wurde, zeitlich verschoben mit dem Empfangssignal korreliert. Es ergibt sich ein Korrelationsmaximum zu der Verschiebungszeit, welche zu der Entfernung 18 des Objekts 17 proportional ist. Da im Wesentlichen verrauschte Signale ausgewertet werden, ist die Höhe des Korrelationsmaximums ein Maß für die Signalstärke, so dass verschiedene Objekte 17 unterschieden werden können. Die Auflösung in der Entfernung kann beispielsweise durch die Abtastfrequenz des Empfangssignals bestimmt werden. Zum Erzeugen des Korrelationssignals können mehrere Korrelationskoeffizienten erzeugt werden. Dabei wird jedem Korrelationskoeffizienten der mehreren Korrelationskoeffizienten eine jeweilige Verschiebungszeit zugeordnet. Jeder Korrelationskoeffizienten wird durch korrelieren des um die jeweils zugeordnete Verschiebungszeit verschobenen modulierten Signals mit dem Empfangssignal gebildet. Die Entfernung zu dem Objekt wird in Abhängigkeit von den mehreren Korrelationskoeffizienten, beispielsweise durch Bestimmen eines absoluten oder lokalen Maximums, und den zugeordneten Verschiebungszeiten bestimmt. Dabei ist es vorteilhaft, eine hohe Signifikanz des Signals in der Zeitebene durch das kontinuierlich modulierte FMCW-Signal, welches viele, voneinander unabhängige Frequenzen enthält, zu nutzen. Um eine hohe Abtastrate des Empfangssignals zu erreichen, kann beispielsweise eine Ein-Bit-Wandlung vorteilhaft sein. Zur Erzeugung des binären Empfangssignals kann das Empfangssignal mit einem ersten Signalwert erzeugt werden, wenn ein Pegel des empfangenen Lichts eine bestimmte Intensität unterschreitet, und ein Empfangssignal mit einem zweiten Signalwert erzeugt werden, wenn der Pegel des empfangenen Lichts die bestimmte Intensität erreicht oder überschreitet. Dazu kann beispielsweise ein amplitudenbegrenzender Verstärker verwendet werden, welcher in Abhängigkeit von dem empfangenen Licht ein Empfangssignal mit eindeutigen Pegeln, beispielsweise einer binären Folge von Nullen und Einsen, erzeugt. Da die Signifikanz in der Zeit liegt, geht durch diese binäre Wandlung kaum Information verloren, da die Signifikanz in der Amplitude aufgrund der zu erwartenden Amplitudenmodulation durch das Objekt 17 unzuverlässig sein kann. Durch das auf binäre Signale reduzierte Empfangssignal kann ein entsprechender Korrelator verhältnismäßig einfach aufgebaut sein und zur Verarbeitung langer Sequenzen geeignet sein. Dies verbessert das Korrelationsergebnis. Wenn das Empfangssignal digital oder binär vorliegt, ist es vorteilhaft, dass das Vergleichsmuster des modulierten Sendesignals ebenfalls digital ist. Dies kann beispielsweise erreicht werden, indem zur Modulation der Lichtquelle ein synthetisiertes digitales Signal verwendet wird. Dies kann beispielsweise mit gleichbleibender Qualität und nur abhängig von einem Sendetakt erzeugt werden. Wenn der Empfangstakt gleich dem Sendetakt ist, können auftretende Fehler, beispielsweise aufgrund von Temperaturdriften, kompensiert werden. Durch die Verwendung des Korrelationsverfahrens können lange Signalfolgen verwendet werden. Der nutzbare Frequenzhub ist somit nicht auf die Laufzeit des Signals für die zu messende Distanz beschränkt. Wie zuvor beschrieben, kann das Verfahren rein digital realisiert werden und daher kostengünstig aufgebaut werden. Beispielsweise kann ein moduliertes Signal mit einer Länge von 50 $\mu$sec - 500 $\mu$sec ausgesendet werden und über dieser Zeit die Frequenz von 10 MHz auf 100 MHz gesteigert werden. Ein derartiges moduliertes Signal lässt sich beispielsweise über ein Schieberegister erzeugen, in welchem ein synthetisch erzeugtes Signal abgelegt ist. Eine Taktfrequenz, mit welcher synchron das Sendesignal ausgetaktet und das Empfangssignal eingetaktet werden kann, kann beispielsweise 1 GHz betraten und ist daher mit verhältnismäßig geringem Aufwand realisierbar. Die Messzeit von 50 $\mu$sec - 500 $\mu$sec ist für die meisten Anwendungen von Fahrerassistenzsystemen so schnell, dass auch Multiplexverfahren bei Mehrkanalsensoren möglich sind. Darüber hinaus können mehrere Messungen durchgeführt und gemittelt werden, um die Signalqualität weiter zu verbessern.

Das modulierte Signal, mit welchem die Lichtquelle 11 angesteuert wird, kann weiterhin mit einem zufälligen Frequenzmodulationsverfahren erzeugt werden. Dabei wird eine Sendefrequenz aus einem Frequenzband über eine bestimmte Zeit zufällig variiert. Dieses Verfahren wird auch als Random Frequency Modulation (RFM) bezeichnet. Zur Bestimmung der Entfernung zu dem Objekt 17 kann das zuvor beschriebene Korrelationsverfahren in vergleichbarer Art und Weise verwendet werden. Das zufällige Frequenzmodulationsverfahren bietet eine sehr hohe Störsicherheit, beispielsweise gegenüber Streulicht- und anderen Messverfahren. Darüber hinaus können mehrere Messkanäle simultan gemessen werden, da entsprechende Übersprecher von anderen Messkanälen durch die Korrelationsauswertung unterdrückt werden. Die Modulationsfrequenzen und die zeitliche Länge des Sendesignals können vergleichbar zu denen des frequenzmodulierten Dauerstrichverfahrens gewählt werden. Das zufällige Frequenzmodulationsverfahren kann somit insbesondere dann verwendet werden, wenn mehrere Lichtquellen gleichzeitig eine Szene oder einen Raum beleuchten und mit allen gleichzeitig gemessen werden soll. Beispielsweise können mit dem zufälligen Frequenzmodulationsverfahren Messungen mit allen Scheinwerfern des Fahrzeugs 10 gleichzeitig durchgeführt werden. Jede Lichtquelle bekommt dabei eine eigene signifikante Signatur, welche dann durch das Korrelationsverfahren unterschieden werden kann. Darüber hinaus können gleichzeitig Daten, welche in das Modulationssignal eincodiert werden, an andere Fahrzeuge oder Empfänger am Straßenrand übertragen werden. Für eine kontinuierliche Entfernungsmessung ist eine kontinuierliche Ansteuerung der Lichtquelle 11 erforderlich, so dass dieses Verfahren besonders für Lichtquellen geeignet ist, welche dauerhaft eingeschaltet sind, wie z.B. ein Tagfahrlicht oder ein Scheinwerfer bei einer Nachtfahrt. Das zuvor beschriebene frequenzmodulierte Dauerstrichverfahren und das zuvor beschriebene zufällige Frequenzmodulationsverfahren können auch kombiniert verwendet werden. Beispielsweise kann wegen der besseren Signalqualität zunächst mit dem frequenzmodulierten Dauerstrichverfahren gearbeitet werden. Wenn Störer detektiert werden, beispielsweise Lichtquellen anderer Fahrzeuge, kann auf das zufällige Frequenzmodulationsverfahren umgeschaltet werden. Ebenso kann zumindest zeitweise auf das zufällige Frequenzmodulationsverfahren umgeschaltet werden, wenn eine Datenübertragung erforderlich ist. Die Lichtquelle 11 und der Sensor 12 können gleichermaßen für das frequenzmodulierte Dauerstrichverfahren wie für das zufällige Frequenzmodulationsverfahren verwendet werden.

Bei dem Verfahren zur Bestimmung der Entfernung zu dem Objekt 17 kann ferner ein Einfrequenzmodulationsverfahren zum Erzeugen des modulierten Signals zum Ansteuern der Lichtquelle 11 verwendet werden. Das Einfrequenzmodulationsverfahren verwendet eine konstante Modulationsfrequenz und ist daher besonders einfach zu realisieren. Demgegenüber kann es jedoch verhältnismäßig einfach durch Nebel, Gischt, Staub oder fremde Lichtquellen gestört werden und kann daher insbesondere in Anwendungen eingesetzt werden, wo derartige Störungen beispielsweise durch den Einbauort nicht auftreten können, oder wenn ein temporärer Ausfall toleriert werden kann, wie z.B. bei einer Entfernungsmessung im Innenraum oder bei Einparkhilfen, bei denen ein zu nahes Messen keine negativen Folgen hat und durch die niedrige Geschwindigkeit des Fahrzeugs die notwendigen Abstände gering sind oder eine Gischtentwicklung unerheblich ist. Für eine kontinuierliche Entfernungsmessung ist bei dem Einfrequenzverfahren ebenfalls eine permanent aktive Lichtquelle notwendig, so dass das Einfrequenzverfahren vorzugsweise in Verbindung mit beispielsweise einem Tagfahrlicht oder einem Abblendlicht des Fahrzeugs verwendet werden kann. Eine Entfernungsbestimmung, d.h. eine Auswertung des Einfrequenzmodulationsverfahrens, kann beispielsweise auf eine Phasenmessung zurückgeführt werden, welche eine Phasendifferenz zwischen dem modulierten Signal und dem Empfangssignal bestimmt. Beispielsweise kann die Phasenmessung durch einen Vergleich des Empfangssignals mit dem modulierten Signal digital über eine Und-Verknüpfung erfolgen. Geeignete typische Modulationsfrequenzen liegen beispielsweise im Bereich von 5-20 MHz. In diesem Bereich kann eine Eindeutigkeit der auf der Basis der Einfrequenzmodulation basierenden Phasenauswertung sichergestellt werden.

Schließlich kann zur Erzeugung des modulierten Signals zum Ansteuern der Lichtquelle 11 ein Pulsmodulationsverfahren verwendet werden. Mit dem Pulsmodulationsverfahren kann insbesondere auch dann gemessen werden, wenn die Lichtquelle 11 ausgeschaltet ist. Die kurzen Lichtimpulse des Pulsmodulationsverfahrens können so gestaltet werden, dass sie für den Betrachter nicht oder kaum sichtbar sind. Wenn eine Lichtquelle eingeschaltet ist, kann ebenfalls mit dem Pulsmodulationsverfahren gearbeitet werden, indem die Lichtquelle für die Pulsdauer ausgestaltet wird, oder anders ausgedrückt, indem "negative" Lichtimpulse erzeugt werden. Das Pulsmodulationsverfahren bietet sich daher insbesondere dort an, wo mit einer geringen Messfrequenz von beispielsweise 10 bis 100 Hz gemessen werden soll und das Licht zur Messung nicht erkennbar sein soll. Lichtquellen, wie zum Beispiel ein Abblendlicht, eine Blinkerleuchte, ein Rücklicht, eine Bremsleuchte oder eine Rückfahrleuchte, welche zur Messzeit nicht eingeschaltet sind, können mit kurzen Impulsen mit einer Länge von beispielsweise 10 bis 100 nsec, eingeschaltet werden, welche von einem menschlichen Beobachter wegen der geringen mittleren Leistung nicht bemerkt werden. Bei eingeschalteten Lichtquellen kann das Licht für einen kurzen Zeitraum von beispielsweise 10 bis 100 nsec ausgeschaltet werden, wodurch ein negativer Lichtpuls entsteht, welcher von dem Sensor 12 ebenfalls detektiert werden kann. Die Bestimmung der Entfernung 18 zu dem Objekt 17 kann bei Verwendung des Pulsmodulationsverfahrens beispielsweise mit dem zuvor beschriebenen Korrelationsverfahren erfolgen. Insbesondere kann eine Pulsmodulation verwendet werden, welche aus einer Pulsfolge besteht, die über ungleichförmige Pulsabstände eine hohe zeitliche Signifikanz aufweist. Das in Abhängigkeit von dem empfangenen Licht erzeugte Empfangssignal kann wiederum mit dem modulierten Signal korreliert werden oder alternativ kann als Korrelationsmuster für die Pulsmodulation auch eine mathematische Beschreibung des Pulses dienen. Das Empfangssignal kann über den Messabstand hinweg abgetastet werden. Über ein Oversampling-Verfahren können mehrere solcher Echogramme aufgenommen und als Entfernungshistogramm aufsummiert werden. Dann können mit einer Pulsauswertung Echopulse erkannt und zum Beispiel mit einer Schwerpunktbestimmung eine genaue Entfernung 18 ermittelt werden. Das Verfahren ist sowohl für positive als auch negative Pulse geeignet.

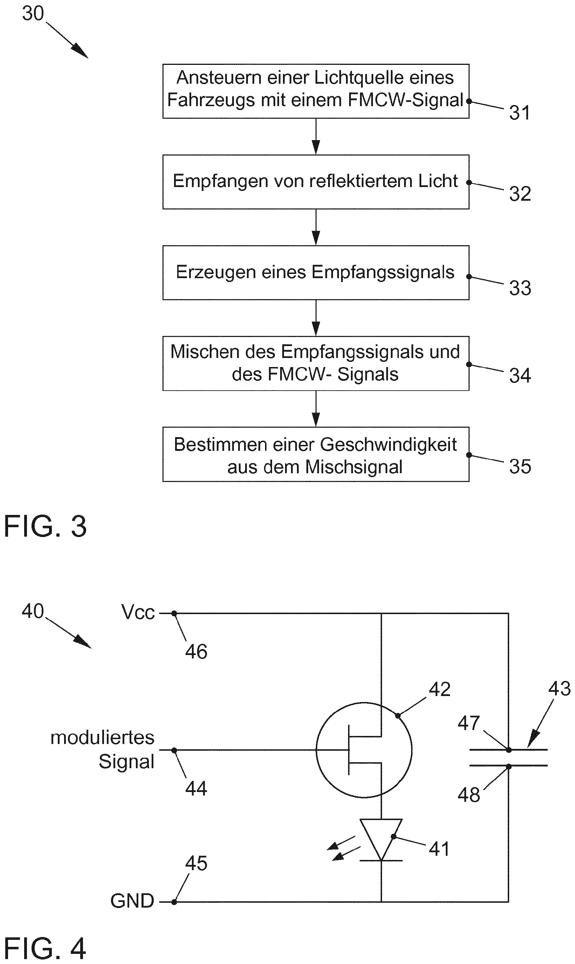

Wie bereits zuvor in Verbindung mit dem frequenzmodulierten Dauerstrichverfahren erwähnt wurde, kann neben der Entfernung 18 zu dem Objekt 17 auch eine Geschwindigkeit des Objekts 17 bestimmt werden. Dies wird nachfolgend unter Bezugnahme auf Fig. 3 im Detail beschrieben werden. Fig. 3 zeigt ein Verfahren 30 zum Bestimmen einer Geschwindigkeit des Objekts 17. Im Schritt 31 wird die Lichtquelle 11 des Fahrzeugs 10 mit einem frequenzmodulierten Signal angesteuert. Im Schritt 32 wird das reflektierte Licht 16 empfangen, welches von der Lichtquelle 11 abgegeben wurde und von dem Objekt 17 in der Umgebung des Fahrzeugs 11 reflektiert wurde. Im Schritt 33 wird ein Empfangssignal in Abhängigkeit von dem empfangenen Licht 16 erzeugt. Im Schritt 34 wird eine Differenzfrequenz zwischen einer Frequenz des frequenzmodulierten Signals, mit welchem die Lichtquelle 11 angesteuert wurde, und einer Frequenz des Empfangssignals durch Mischen der beiden Signale bestimmt. Auf dem Mischsignal, d.h., in Abhängigkeit von der Differenzfrequenz, wird eine Geschwindigkeitsinformation des Objekts 17 im Schritt 35 bestimmt. Das frequenzmodulierte Signal kann insbesondere gemäß dem zuvor beschriebenen frequenzmodulierten Dauerstrichverfahren erzeugt werden, bei welchem die Modulationsfrequenz des frequenzmodulierten Signals über eine bestimmte Zeit von einer Anfangsfrequenz zu einer Endfrequenz geändert wird. Wie zuvor beschrieben, kann auch eine Entfernungsinformation zu dem Objekt 17 in Abhängigkeit von dem Empfangssignal und der Frequenz des frequenzmodulierten Signals bestimmt werden, beispielsweise durch Mischen der Signale oder Korrelieren der Signale. Die Frequenz des frequenzmodulierten Signals liegt vorzugsweise in einem Bereich von 10 bis 200 MHz.

Das Verfahren wird nachfolgend beispielhaft anhand einer Modulation mit Hilfe eines frequenzmodulierten Dauerstrichverfahrens (FMCW) im Detail beschrieben werden. Bei der FMCW-Modulation wird ein kontinuierlicher Frequenzhub von beispielsweise 10 MHz bis 100 MHz in 40 Mikrosekunden moduliert. Durch einen Abstand von 200 Metern zwischen dem Fahrzeug 10 und dem Objekt 17 ergibt sich eine Verschiebung um 1,32 $\mu$s oder 2.97 MHz. Durch eine relative Geschwindigkeit von v ergibt sich eine weitere Mischsequenz gemäß der Dopplerformel:

$$f = \left( \frac{c}{c+v} \right) \cdot f_0$$

wobei f die Modulationsfrequenz ist, $f_0$ die Frequenz des Empfangssignals ist und c die Lichtgeschwindigkeit ist. In der nachfolgenden Tabelle wird die Dopplerfrequenzverschiebung für verschiedene Geschwindigkeiten des Objekts dargestellt.

| Doppler-Frequenz | | Modulations-Frequenz | | | | |
|---|---|---|---|---|---|---|
| | | 20 MHz | 40 MHz | 60 MHz | 80 MHz | 100 MHz |
| Geschwindigkeit | 20 km/h | 0.37 Hz | 0.74 Hz | 1.11 Hz | 1.48 Hz | 1.85 Hz |
| | 40 km/h | 0.74 Hz | 1.48 Hz | 2.22 Hz | 2.96 Hz | 3.70 Hz |
| | 60 km/h | 1.11 Hz | 2.22 Hz | 3.33 Hz | 4.44 Hz | 5.56 Hz |
| | 80 km/h | 1.48 Hz | 2.96 Hz | 4.44 Hz | 5.93 Hz | 7.41 Hz |
| | 100 km/h | 1.85 Hz | 3.70 Hz | 5.56 Hz | 7.41 Hz | 9.26 Hz |
| | 120 km/h | 2.22 Hz | 4.44 Hz | 6.67 Hz | 8.89 Hz | 11.11 Hz |
| | 140 km/h | 2.59 Hz | 5.19 Hz | 7.78 Hz | 10.37 Hz | 12.96 Hz |
| | 160 km/h | 2.96 Hz | 5.93 Hz | 8.89 Hz | 11.85 Hz | 14.81 Hz |
| | 180 km/h | 3.33 Hz | 6.67 Hz | 10.00 Hz | 13.33 Hz | 16.67 Hz |
| | 200 km/h | 3.70 Hz | 7.41 Hz | 11.11 Hz | 14.81 Hz | 18.52 Hz |
| | 220 km/h | 4.07 Hz | 8.15 Hz | 12.22 Hz | 16.30 Hz | 20.37 Hz |
| | 240 km/h | 4.44 Hz | 8.89 Hz | 13.33 Hz | 17.78 Hz | 22.22 Hz |
| | 260 km/h | 4.81 Hz | 9.63 Hz | 14.44 Hz | 19.26 Hz | 24.07 Hz |

Die Tabelle zeigt, dass die Dopplerfrequenz von der Modulationsfrequenz abhängt. Eine höhere Modulationsfrequenz führt auch zu einer höheren Dopplerfrequenz. Die FMCW-Modulation kann daher beispielsweise so geändert werden, dass in beispielsweise 20 $\mu$s die Frequenz von 10 MHz auf 100 MHz moduliert wird und dann für weitere 20 $\mu$s die Frequenz von 100 MHz gehalten wird. Die Dopplerfrequenz kann dann beispielsweise bei 100 MHz gemessen werden. Die Dopplerfrequenz kann beispielsweise durch Mischen der Sendefrequenz mit der Empfangsfrequenz direkt bestimmt werden. Aus praktischen Gründen kann jedoch alternativ die Dopplerfrequenz durch Mischen des Empfangssignals mit einem weiteren Signal bestimmt werden, welches eine um einen vorbestimmten Wert von der Frequenz des frequenzmodulierten Sendesignals abweichende Frequenz aufweist. Beispielsweise kann das Empfangssignal mit einem Signal verglichen oder gemischt werden, welches eine um 100 kHz niedrigere Frequenz als das frequenzmodulierte Sendesignal aufweist. Dadurch erhält man für die Dopplerfrequenz bei dem in der Tabelle gezeigten Beispiel Frequenzen zwischen 100.000 und 100.024 Hz für Geschwindigkeiten zwischen 0 und 260 km/h. Diese deutlich höheren Frequenzen können einfacher gemessen werden und können innerhalb der Messdauer von beispielsweise 20 $\mu$s entstehen.

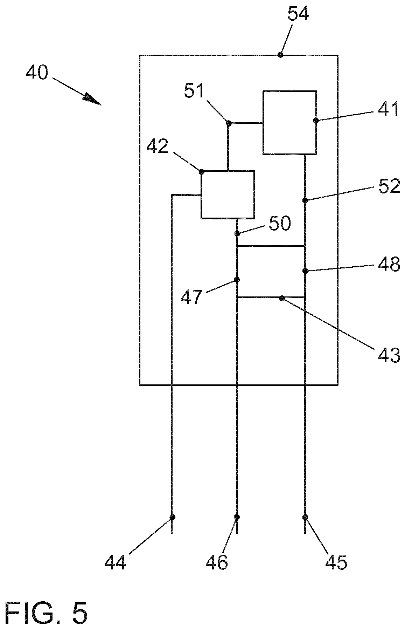

Wie zuvor beschrieben wurde ist die Lichtquelle 11 des Fahrzeugs 10 beispielsweise in einem Frequenzbereich von 10 MHz bis 100 MHz zu modulieren. Dazu eignen sich insbesondere Leuchtdiodenlichtquellen, welche Halbleiterleuchtdioden zur Erzeugung des Lichts 15 verwenden. Insbesondere Leuchtdioden, welche ultraviolettes oder blaues Licht erzeugen, weisen eine derartig große Modulationsbandbreite auf. Für die Farbumsetzung in weißes Licht oder andersfarbige Lichtkomponente, wie zum Beispiel rotes oder grünes Licht, können diese Leuchtdioden zusätzlich Phosphorbeschichtungen aufweisen, welche ultraviolettes Licht oder blaues Licht in andersfarbiges Licht umsetzen. Das hochfrequente Licht zur Entfernungsmessung oder Geschwindigkeitsmessung ist insbesondere das blaue Licht der Leuchtdioden. Die Ströme durch die Leuchtdioden liegen im Bereich von einigen Ampere, um entsprechende Leuchtreichweiten zu erreichen. Um eine effiziente Modulation zu erreichen, muss eine entsprechende Ansteuerung der Leuchtdiode entsprechend ausgelegt werden. Fig. 4 zeigt eine Leuchtdiodenlichtquelle 40, welche auch als Modulationskreis bezeichnet wird und welche eine entsprechende Auslegung aufweist. Die Leuchtdiodenlichtquelle 40 umfasst eine Leuchtdiode 41, ein Schaltelement 42 und Energiespeicherelement 43. Die Leuchtdiode 41 kann, wie zuvor beschrieben, vorzugsweise eine Leuchtdiode umfassen, welche blaues Licht erzeugt oder zumindest einen Blaulichtanteil aufweist. Das Schaltelement 42 kann beispielsweise einen Transistor, insbesondere einen Feldeffekttransistor umfassen. Das Energiespeicherelement kann beispielsweise einen Kondensator umfassen. Das Schaltelement 42 wird von einem modulierten Signal 44 angesteuert. Eine Energieversorgung umfasst einen Masseanschluss (GND) 45 und einen Stromversorgungsanschluss (Vcc) 46. Wenn das Schaltelement 42 aufgrund einer Ansteuerung von dem modulierten Signal 44 durchschaltet, fließt ein Strom von dem Versorgungsspannungsanschluss 46 durch die Leuchtdiode 41 zu dem Masseanschluss 45 und darüber hinaus ein weiterer Strom einer in dem Energiespeicherelement 43 gespeicherten Ladung von einem ersten Anschluss 47 durch das Schaltelement 42 und die Leuchtdiode 41 zu einem zweiten Anschluss 48 des Energiespeicherelements 43. Aufgrund der hohen Schaltfrequenzen ist ein Aufbau mit möglichst kurzen Leitungen insbesondere zwischen den Elementen 41, 42 und 43 anzustreben, damit die Induktivität der Leitungen möglichst gering ist und somit Verluste, eine Störanfälligkeit und insbesondere eine abgestrahlte Störstrahlung möglichst gering sind. Im gesperrten Zustand des Schaltelements 42 wird das Energiespeicherelement 43 von der Versorgungsspannung 46 und dem Masseanschluss 45 aufgeladen. Im durchgeschalteten Zustand des Schaltelements 42 stellt das Energiespeicherelement für einen kurzen Zeitraum einen sehr großen Strom durch die Leuchtdiode 41 zur Verfügung. Daher sind insbesondere die Verbindungen zwischen dem Energiespeicherelement 43, dem Schaltelement 42 und der Leuchtdiode 41 möglichst kurz zu halten. Wenn die Leitungen im Kreis Leuchtdiode 41, Schalter 42 und Energiespeicher 43 zu lang werden, stellen sie eine Induktivität dar, welche sich jeder Stromänderung "entgegenstemmt". Dadurch ist eine sehr hohe Spannung erforderlich, um eine Modulation, welche eine schnelle Stromänderung darstellt, erzeugen zu können. Dabei können schon wenige Millimeter Leitungslänge einen erheblichen Einfluss haben. Die Energie, welche bei der Modulation in den Leitungen gespeichert wird, wird zum Teil in den Leitungen absorbiert und in Wärme umgewandelt und zu einem anderen Teil als Störstrahlung abgestrahlt. Um beispielsweise 10 W Licht mit der Leuchtdiode 41 zu erzeugen, ist durch die Leuchtdiode 41 ein Strom von näherungsweise 10 Ampere erforderlich. Wenn der Lichtpuls beispielsweise 50 nsec lang sein soll, sind bei einem verdrahteten Aufbau, bei welchem die Leuchtdiode 41, das Schaltelement 42 und der Kondensator 43 als separate Elemente auf einer gedruckten Schaltung angeordnet sind, näherungsweise 200 Volt erforderlich. Demzufolge ist ein Energiebedarf von 200 V x 10 A x 50 nsec = 0,1 mJ erforderlich. Bei einem Aufbau in SMD-Technik sind beispielsweise 60 V und 10 A notwendig, d.h., ein Energiebedarf von 30 μJ. Bei einem optimierten Aufbau, welcher nachfolgend in Verbindung mit Fig. 5 gezeigt werden wird, sind jedoch nur 8 V und 10 A erforderlich, d.h., ein Energiebedarf von 4 μJ. In allen Fällen werden ca. 40 W in der Leuchtdiode 41 absorbiert. Der Wirkungsgrad beträgt also im optimierten Aufbau 50%, im Aufbau mit SMD-Technik ca. 6% und im bedrahteten Aufbau auf einer gedruckten Schaltung beträgt der Wirkungsgrad nur 2%.

Fig. 5 zeigt den optimierten Aufbau der Leuchtdiodenlichtquelle 40. Die Leuchtdiodenlichtquelle 40 umfasst die Leuchtdiode 41, das Schaltelement 42 und das Energiespeicherelement 43. Das Schaltelement 42 ist in einer Reihenschaltung mit der Leuchtdiode 41 gekoppelt. Das Energiespeicherelement 43 ist parallel zu der Reihenschaltung von Leuchtdiode 41 und Schaltelement 42 gekoppelt. Wenn das Schaltelement 42 durchschaltet, wird ein Strompfad durch die Leuchtdiode 41 geschaltet, welcher von einem ersten Anschluss 47 des Energiespeicherelements 43 über einen ersten Leitungsabschnitt 50 zu dem Schaltelement 42 verläuft und von dort über einen zweiten Leitungsabschnitt 51 zu der Leuchtdiode 41 verläuft. Über einen dritten Leitungsabschnitt 52 verläuft der Strompfad zu dem zweiten Anschluss 48 des Energiespeicherelements 43. Wie in der Fig. 5 gezeigt ist, sind die Elemente 41, 42 und 43 in einem gemeinsamen Gehäuse 54 angeordnet. Anders ausgedrückt sind die Halbleiterelemente 41 und 42 sowie der Kondensator 43 ohne eigene Gehäuse in dem gemeinsamen Gehäuse 54 untergebracht. Dadurch können die Längen der Verbindungen 50 bis 52 entsprechend kurz ausgestaltet werden. Beispielsweise kann der gesamte Strompfad, welcher das Energiespeicherelement 43, die Leuchtdiode 41 und das Schaltelement 42 verbindet, eine Länge von weniger als 12 mm haben. Vorzugsweise ist die Länge des Strompfads kürzer als 9 mm. Jede der Verbindungen 50, 51 und 52 kann beispielsweise 1 bis 3 mm betragen. Die Verbindungen 50 bis 52 können zusammen mit den Anschlüssen 44 bis 46 einen sogenannten Leadframe bilden, welcher einerseits die Außenanschlüsse 44 bis 46 der Leuchtdiodenlichtquelle 40 und andererseits die Verbindungen 50 bis 52 zur Kopplung der Elemente 41 bis 43 bereitstellt. Aufgrund der kurzen Verbindungslängen der Verbindungen 50 bis 52 kann ein hoher Wirkungsgrad der Leuchtdiodelichtquelle 40 erreicht werden. In dem Gehäuse 54 können mehrere Leuchtdiodenlichtquellen realisiert werden, indem entsprechend mehrere Leuchtdioden 41, Schaltelemente 42 und Energiespeicher 43 auf einem gemeinsamen Leadframe in dem gemeinsamen Gehäuse 54 angeordnet werden. Die Leuchtdiode 41 kann Licht mit einer Wellenlänge von weniger als 760 nm, vorzugsweise weniger als 500 nm erzeugen, also insbesondere blaues Licht. Darüber hinaus kann in dem Gehäuse 54 eine Phosphorbeschichtung vorgesehen sein, welche ultraviolettes Licht oder blaues Licht, welches von der Leuchtdiode 41 erzeugt wird, in andersfarbiges Licht umsetzt. Die Leuchtdiodenlichtquelle 40 oder mehrere der Leuchtdiodenlichtquellen 40 können in einer Beleuchtungseinrichtung 11 des Fahrzeugs 10 verwendet werden, um beispielsweise eine Umgebung des Fahrzeugs 10 auszuleuchten oder ein Lichtsignal, wie zum Beispiel ein Blinklicht oder ein Bremslicht, zu erzeugen.

Bei den zuvor beschriebenen Verfahren und Vorrichtungen wurden vorhandene Beleuchtungseinrichtungen des Fahrzeugs, wie zum Beispiel Scheinwerfer eines Abblendlichts, Nebelscheinwerfer, Blinkleuchten, Bremsleuchten oder Rückfahrscheinwerfer, verwendet, um ein moduliertes Lichtsignal zu erzeugen, welches von einem Objekt in der Umgebung des Fahrzeugs reflektiert wird und von einem Sensor am Fahrzeug empfangen wird. Aus dem Empfangssignal des Sensors und der Kenntnis über das modulierte Signal, mit welchem die Beleuchtungseinrichtung des Fahrzeugs angesteuert wurde, kann eine Entfernung oder eine Geschwindigkeit des Objekts bestimmt werden. Da die primäre Funktion der Beleuchtungseinrichtung ein Ausleuchten einer Umgebung des Fahrzeugs oder ein Ausgeben eines Lichtsignals, wie zum Beispiel eines Blinksignals oder eines Bremssignals, ist, wird nachfolgend ein Verfahren 60 beschrieben werden, welches gleichzeitig eine Bestimmung einer Entfernungsinformation sicherstellt. Dazu wird im Schritt 61 zunächst ein Betriebszustand des Fahrzeugs erfasst. Der Betriebszustand des Fahrzeugs kann beispielsweise einen Soll-Zustand für die Beleuchtungseinrichtung des Fahrzeugs sein, welcher anzeigt, ob die Beleuchtungseinrichtung eingeschaltet oder ausgeschaltet sein soll. Das Erfassen des Betriebszustands kann ferner ein Bestimmen einer Umgebungshelligkeit in einer Umgebung oder innerhalb des Fahrzeugs umfassen oder ein Bestimmen eines Entfernungsmessbereichs, für welchen die Entfernungsinformation zu Bestimmen ist. Abhängig von dem so bestimmten Betriebszustand wird im Schritt 62 ein moduliertes Sendesignal erzeugt. Beispielsweise kann ein erstes moduliertes Sendesignal erzeugt werden, wenn der Soll-Zustand für die Beleuchtungseinrichtung anzeigt, dass die Beleuchtungseinrichtung eingeschaltet sein soll. Weiterhin kann ein zweites moduliertes Sendesignal erzeugt werden, welches invertiert zu dem ersten modulierten Sendesignal ist, wenn der Soll-Zustand anzeigt, dass die Beleuchtungseinrichtung ausgeschaltet sein soll. So kann beispielsweise bei ausgeschalteter Beleuchtungseinrichtung ein moduliertes Sendesignal erzeugt werden, welches kurze Lichtimpulse umfasst, deren Energie nicht ausreicht, um von einem Beobachter gesehen zu werden. Umgekehrt kann, wenn die Beleuchtungseinrichtung eingeschaltet sein soll, ein moduliertes Sendesignal erzeugt werden, welches die Beleuchtungseinrichtung für kurze Impulse ausschaltet, welche so kurz sind, dass sie von einem Betrachter nicht bemerkt werden und somit die Beleuchtungseinrichtung als durchgehend eingeschaltet erscheint. Im Schritt 63 wird die Beleuchtungseinrichtung 11 des Fahrzeugs 10 mit dem erzeugten Sendesignal angesteuert. Im Schritt 64 wird reflektiertes Licht 16 empfangen, welches als Licht 15 von der Beleuchtungsvorrichtung 11 abgegeben wurde und von dem Objekt 17 reflektiert wurde. In Abhängigkeit von dem empfangenen Licht 16 wird im Schritt 65 ein Empfangssignal erzeugt. Im Schritt 66 wird das Empfangssignal mit dem Sendesignal kombiniert und im Schritt 67 die Entfernung des Objekts 17 aus der Kombination bestimmt.

Die Lichtmenge, welche von einem Betrachter nicht gesehen werden kann, hängt unter anderem von einer gesamten Helligkeit der Umgebung des Fahrzeugs und einem Kontrast in der Sendeebene ab. Tagsüber können erheblich größere Lichtmengen von der Beleuchtungseinrichtung abgestrahlt werden, welche von einem Beobachter nicht bemerkt werden, als nachts. Typischerweise ist ein Signal zu Rausch Verhältnis tagsüber durch das Störlicht der Sonne erheblich schlechter, sodass tagsüber höhere Sendeleistungen als nachts notwendig sind. Tagsüber können beispielsweise Leistungen von bis zu 2 mJ abgestrahlt werden, welche von einem Beobachter nicht bemerkt werden. Bei dem Verfahren kann daher eine Durchschnittsleistung des modulierten Signals in Abhängigkeit von dem Betriebszustand, insbesondere eine Umgebungshelligkeit, eingestellt werden. Weiterhin kann die Sendeenergie in Abhängigkeit von einem Entfernungsmessbereich, für welchen die Entfernungsmessinformation zu bestimmen ist, eingestellt werden. Diese hängt beispielsweise von dem Bedarf einer Applikation ab, welche die Entfernungsinformation verwendet. Ein Fahrerassistenzsystem für eine Abstandsregelung oder ein Kollisionsvermeidungssystem kann einen größeren Entfernungsmessbereich erfordern als ein Einparksystem.

Das modulierte Sendesignal kann beispielsweise ein pulsmoduliertes Signal umfassen. Das pulsmodulierte Signal kann eine Pulsdauer im Bereich von 1 bis 500 ns, vorzugsweise 10 bis 100 ns aufweisen. Eine Frequenz, mit welcher die Pulse des pulsmodulierten Signals wiederholt werden, kann im Bereich von 1 bis 1.000 Hz, vorzugsweise 10 bis 100 Hz, betragen.

Die Beleuchtungseinrichtung des Fahrzeugs kann beispielsweise die zuvor beschriebene Leuchtdiodenlichtquelle oder mehrere Leuchtdioden umfassen. Bei weißen Leuchtdioden kann der primäre blaue Lichtanteil als Modulationsträger genutzt werden. Dieser wird hochfrequent mit dem modulierten Sendesignal moduliert und bleibt im Spektrum der weißen Leuchtdiode bestehen. Der Phosphor der Leuchtdiode kann den schnellen Modulationen nicht folgen, da er im Allgemeinen träge ist. So entsteht ein für die menschliche Wahrnehmung weißes gleichmäßig leuchtendes Licht, während dessen Blauanteil die gewünschte Modulation aufweist.

In Abhängigkeit von dem Betriebszustand des Fahrzeugs und dem modulierten Sendesignal kann eine weitere Beleuchtungseinrichtung des Fahrzeugs angesteuert werden. Das Fahrzeug 10 fährt beispielsweise auf einer Landstraße und ein Fahrerassistenzsystem, wie z.B. eine adaptive Geschwindigkeitsregelung, wird eingeschaltet. Die Scheinwerfer des Fahrzeugs sind ausgeschaltet. Daher wird ein moduliertes Sendesignal erzeugt, welches kurzzeitige Lichtimpulse umfasst. Damit kann eine Entfernungsinformation zu einem Objekt vor dem Fahrzeug für das adaptive Geschwindigkeitsregelungssystem bereit gestellt werden. Ein Einschalten eines Fahrlichts des Fahrzeugs ist somit nicht notwendig, d.h. es muss nicht die gesamte Energie für alle Leuchtdiodenleuchtmittel der Scheinwerfer des Fahrzeugs zur Verfügung gestellt werden, was insbesondere für ein Elektrofahrzeug von Vorteil sein kann. Insbesondere das adaptive Geschwindigkeitsregelungssystem benötigt eine große Messreichweite. Wenn, wie zuvor beschrieben, am Tag die Scheinwerfer ausgeschaltet sind, kann beispielsweise das Fernlicht mit hoher Energie genutzt werden, um Messimpulse auszusenden, die eine hohe Reichweite haben. Fährt das Fahrzeug hingegen bei Dunkelheit, wird das Fernlicht durch kurzzeitiges Absenken der Helligkeit moduliert, um die große Messreichweite zu ermöglichen. Wenn bei Dunkelheit ein Fahrzeug entgegenkommt, ist ein Betrieb des Fernlichts jedoch nicht mehr möglich, um den Fahrer des entgegenkommenden Fahrzeugs nicht zu blenden. In diesem Fall können Leuchtdioden des Abblendlichts durch kurzzeitiges Absenken der Helligkeit moduliert werden, um eine Entfernungsinformation zu bestimmen. Gleichzeitig können Leuchtdioden des Fernlichts mit kurzen Pulsen moduliert werden, um eine Entfernungsinformation zu bestimmen, ohne den Gegenverkehr zu blenden. Anders ausgedrückt werden einige LEDs kurzzeitig eingeschaltet (in diesem Fall LEDs des ausgeschalteten Fernlichts) und andere Leuchtdioden kurzzeitig ausgeschaltet (in diesem Fall Leuchtdioden des Abblendlichts). Dadurch kann eine große Messreichweite ermöglicht werden, ohne dass die Leuchtdioden für das Fernlicht das entgegenkommende Fahrzeug blenden oder stören.

Bei den zuvor beschriebenen Verfahren und Vorrichtungen wurde eine Entfernung des Objekts 17 oder eine Geschwindigkeit des Objekts 17 unter Verwendung einer am Fahrzeug 10 ohnehin vorhandenen Beleuchtungseinrichtung 11 wie z.B. einem Abblendlicht, einem Tagfahrlicht oder einem Fernlicht des Fahrzeugs 10, bestimmt. Nachfolgend wird beschrieben werden, wie unter Verwendung der zuvor beschriebenen Verfahren zusätzlich eine Positionsinformation, also zusätzlich eine Richtungsinformation, des Objekts 17 in Bezug auf das Fahrzeug 10 bestimmt werden kann.

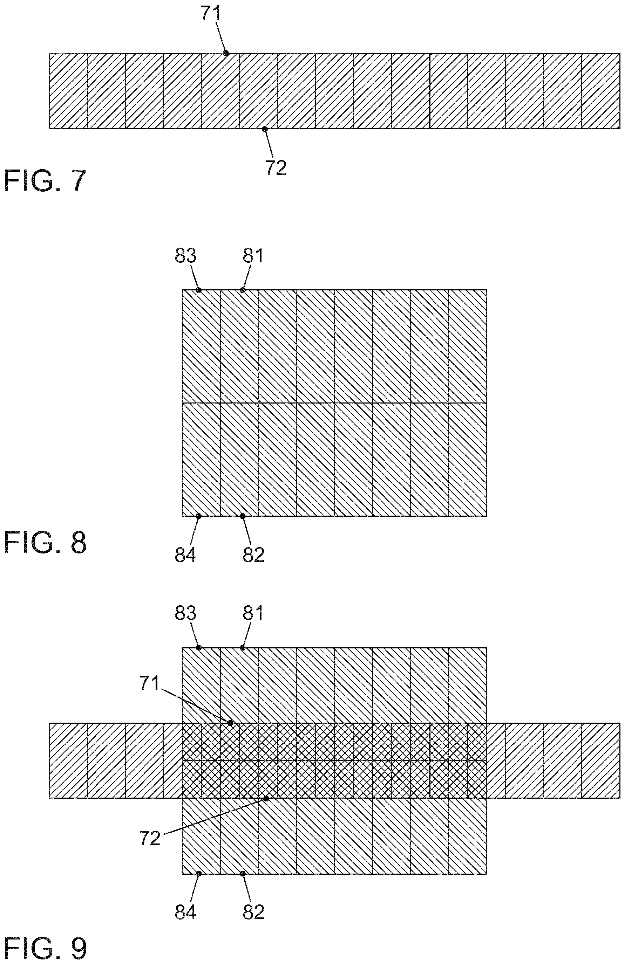

Gemäß einer Ausführungsform umfasst der Sensor 12 des Fahrzeugs 10 mindestens zwei erste Sensoren zum Empfangen von Licht, welches von der Lichtquelle 11 des Fahrzeugs erzeugt wurde und von einer Szene, welche das Objekt 17 umfasst, in der Umgebung des Fahrzeugs reflektiert wurde. Jedem der mindestens zwei ersten Sensoren ist ein jeweiliger erster Erfassungsbereich der Szene zugeordnet. Die ersten Erfassungsbereiche sind in einer Reihe in einer ersten Richtung angeordnet. Fig. 7 zeigt 15 erste Erfassungsbereiche, welche 15 ersten Sensoren zugeordnet sind. Die 15 ersten Erfassungsbereiche sind in einer horizontalen Richtung angeordnet. Zwei der 15 ersten Erfassungsbereiche sind mit den Bezugszeichen 71 und 72 gekennzeichnet. Der Sensor 12 umfasst weiterhin mindestens zwei zweite Sensoren zum Empfangen von von der Szene reflektiertem Licht, wobei jedem der mindestens zwei zweiten Sensoren ein jeweiliger zweiter Erfassungsbereich der Szene zugeordnet ist. Die zweiten Erfassungsbereiche sind in einer zweiten Richtung in einer Reihe angeordnet. Die zweite Richtung ist unterschiedlich zu der ersten Richtung. In Fig. 8 sind zwei zweite Erfassungsbereiche 81 und 82 dargestellt, welche in einer vertikalen Richtung in einer Reihe angeordnet sind. Darüber hinaus sind weitere Erfassungsbereiche in Fig. 8 dargestellt, welche ebenfalls paarweise in der vertikalen Richtung in einer Reihe angeordnet sind, beispielsweise die zwei dritten Erfassungsbereiche 83 und 84. Die Verarbeitungseinheit 13 ist ausgestaltet, eine Position des Objekts 17 in der Umgebung des Fahrzeugs 10 in Abhängigkeit von Signalen der ersten und zweiten Sensoren zu bestimmen. Einer der ersten Erfassungsbereiche, beispielsweise der Bereich 71, ist einem der zweiten Erfassungsbereiche, beispielsweise dem Bereich 81, teilweise überlagert. Der eine der ersten Erfassungsbereiche, also der Bereich 71, kann zusätzlich teilweise einem weiteren der zweiten Erfassungsbereiche, beispielsweise dem Bereich 82, überlagert sein, wie es in Fig. 9 dargestellt ist. Die dritten Erfassungsbereiche 83, 84, welche von entsprechenden dritten Sensoren überwacht werden, können derart angeordnet sein, dass einer der ersten Erfassungsbereiche, beispielsweise der Erfassungsbereich 71, einem der zweiten Erfassungsbereiche, beispielsweise dem Bereich 81, einem weiteren der zweiten Erfassungsbereiche, beispielsweise dem Bereich 82, einem der dritten Erfassungsbereiche, beispielsweise dem Bereich 83, und einem weiteren der dritten Erfassungsbereiche, beispielsweise dem Bereich 84, teilweise überlagert ist.

Die Positionsbestimmung des Objekts 17 mit Hilfe der überlagerten Erfassungsbereiche, wie sie zuvor beschrieben wurden, wird nachfolgend im Detail beschrieben werden. Im Vergleich dazu sein an dieser Stelle angemerkt, dass, bei nicht überlagerten Erfassungsbereichen, mit beispielsweise fünf Erfassungsbereichen lediglich fünf unterschiedliche Positionsbereiche für das Objekt 17 unterschieden werden können. Durch die Überlagerung der Erfassungsbereiche, wie sie in Fig. 9 gezeigt ist, können jedoch mit den Erfassungsbereichen 71 und 81-84 acht unterschiedliche Positionsbereiche für das Objekt 17 unterschieden werden. Wenn nur der Sensor, welcher einem der Erfassungsbereiche 81-84 zugeordnet ist, das Objekt 17 erfasst, befindet sich das Objekt 17 in einem Bereich, welcher dem entsprechenden Sensor zugeordnet ist und welcher den Bereich, der dem Sensor 71 zugeordnet ist, nicht überdeckt. Somit können bereits vier unterschiedliche Bereiche für das Objekt 17 unterschieden werden. Wenn das Objekt 17 in einem der Bereiche 81-84 und zusätzlich in dem Bereich 71 detektiert wird, muss sich das Objekt 17 in einem der vier Überlagerungsbereiche befinden, welche sich durch die Überlagerung des Bereichs 81 mit dem Bereich 71, des Bereichs 82 mit dem Bereich 71, des Bereichs 83 mit dem Bereich 71 oder des Bereichs 84 mit dem Bereich 71 ergeben. Dadurch können vier weitere Positionsbereiche für das Objekt 17 unterschieden werden. Werden die Sensoren derart angeordnet, dass die in Fig. 7 und 8 gezeigten Erfassungsbereiche getrennt überwacht werden können, kann durch die in Fig. 9 gezeigte Überlagerung erreicht werden, dass mit den erforderlichen 15 ersten Sensoren für die Bereiche der Fig. 7 und den 16 Sensoren für die Bereiche der Fig. 8 insgesamt 56 unterschiedliche Bereiche realisiert werden, in denen das Objekt 17 getrennt detektiert werden kann.

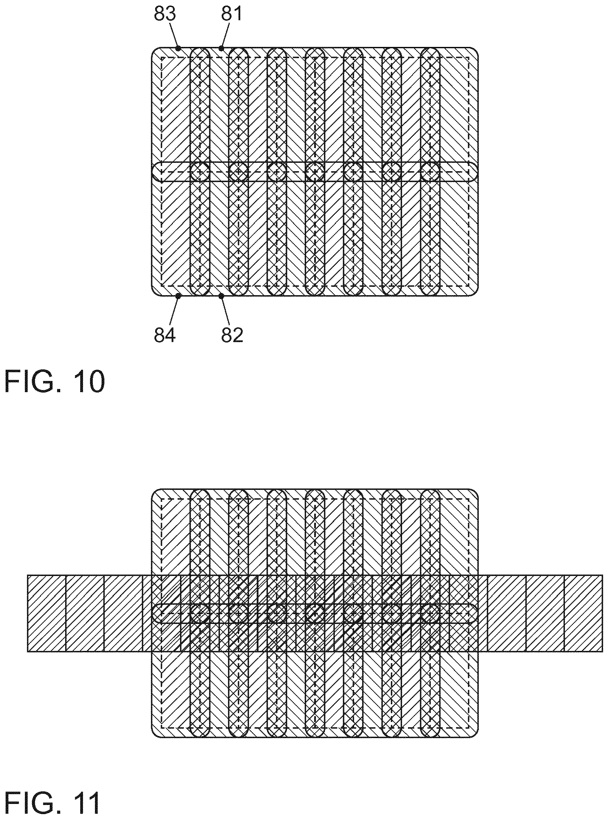

Die zweiten Erfassungsbereiche können ihrerseits zusätzlich in der vertikalen Richtung überlappend sein und zusätzlich in der horizontalen Richtung überlappend zu weiteren Erfassungsbereichen, beispielsweise den dritten Überlappungsbereichen 83, 84 sein. Dies kann beispielsweise durch eine sogenannte "Unschärfe" der zugeordneten Sensoren erreicht werden. Fig. 10 zeigt die zuvor beschriebene Überlappung der zweiten, dritten und weiteren Erfassungsbereiche. In Kombination mit den ersten Erfassungsbereichen der Fig. 7 kann somit eine Vielzahl unterschiedlicher Bereiche zur Positionsbestimmung des Objekts 17 bereitgestellt werden, wie in Fig. 11 dargestellt ist. Durch Überlappen der ersten Erfassungsbereiche untereinander kann die Auflösung der Positionsbestimmung des Objekts 17 weiter erhöht werden, was jedoch aus Gründen der Übersichtlichkeit in Fig. 11 nicht dargestellt ist. Die Fig. 9 und 11 zeigen weiterhin, dass insbesondere im Zentrum, d.h. in dem Bereich, in welchem sich die horizontal angeordneten und die vertikal angeordneten Erfassungsbereiche überschneiden, eine besonders hohe Auflösung zur Positionsbestimmung des Objekts 17 erreicht werden kann. Dies kann für viele Fahrerassistenzsysteme eines Fahrzeugs vorteilhaft genutzt werden, da insbesondere in der Geradeausrichtung des Fahrzeugs eine hohe Auflösung vorteilhaft ist, während eine geringere Auflösung im Randbereich im Allgemeinen toleriert werden kann.

Die Erfassungsbereiche der Fig. 7-11 liegen senkrecht zur Messrichtung, d.h., senkrecht zum Pfeil 16 der Fig. 1.

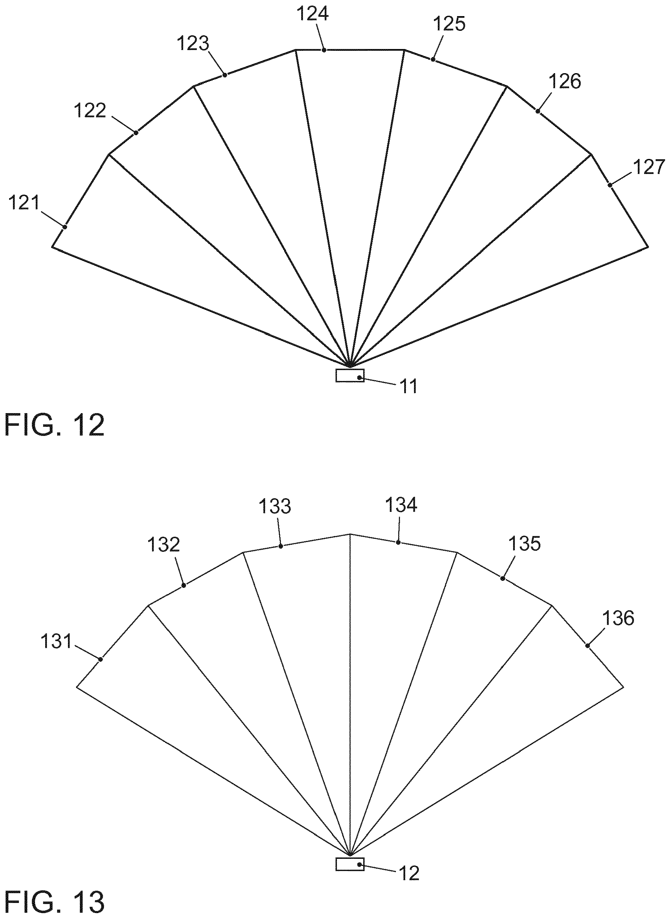

In Verbindung mit den Fig. 12-14 wird eine weitere Möglichkeit dargestellt, eine Positionsinformation des Objekts 17 in Bezug auf das Fahrzeug 10 zu bestimmen.

Die Beleuchtungseinrichtung 11 des Fahrzeugs 10 weist mindestens eine erste Lichtquelle und eine zweite Lichtquelle auf. Die erste und zweite Lichtquelle sind unabhängig voneinander ansteuerbar. Die erste Lichtquelle ist zur Beleuchtung eines ersten Beleuchtungsbereichs einer Szene in einer Umgebung oder innerhalb des Fahrzeugs 10 ausgestaltet. Die zweite Lichtquelle ist zur Beleuchtung eines zweiten Beleuchtungsbereichs der Szene ausgestaltet. Der erste Beleuchtungsbereich ist unterschiedlich zu dem zweiten Beleuchtungsbereich. In Fig. 12 sind mehrere Beleuchtungsbereiche 121-127 dargestellt. Beispielsweise kann der erste Beleuchtungsbereich der Bereich 121 sein und der zweite Beleuchtungsbereich der Bereich 122. Der Sensor 12 umfasst mindestens einen ersten Sensor und einen zweiten Sensor zum Empfangen von von der Szene reflektiertem Licht. Dabei ist dem ersten Sensor ein erster Erfassungsbereich der Szene zugeordnet und dem zweiten Sensor ein zweiter Erfassungsbereich der Szene zugeordnet. Der erste Erfassungsbereich ist unterschiedlich zu dem zweiten Erfassungsbereich. In Fig. 13 sind sechs Erfassungsbereiche 131-136 dargestellt. Der erste Erfassungsbereich kann beispielsweise der Bereich 131 und der zweite Erfassungsbereich kann beispielsweise der Bereich 132 sein. Die Verarbeitungseinheit 13 steuert die erste und zweite Lichtquelle und gegebenenfalls weitere Lichtquellen zur Erzeugung der Beleuchtungsbereiche 123-127 an und bestimmt eine Position des Objekts 17 in der Umgebung des Fahrzeugs 10 in Abhängigkeit von Signalen der ersten und zweiten Sensoren und gegebenenfalls weiterer Sensoren, welche den Erfassungsbereichen 133-136 zugeordnet sind, und in Abhängigkeit von der Ansteuerung der Lichtquellen. Die Bereiche 121-127 und 131-136 liegen beispielsweise in der Ebene der Pfeile 15 und 16 der Fig. 1.

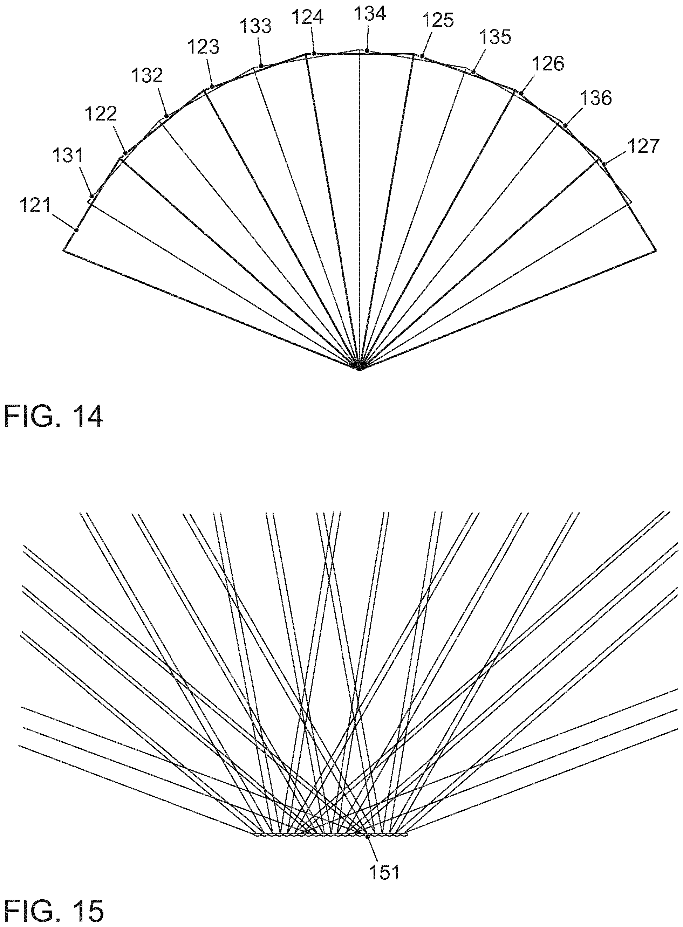

Die Erfassungsbereiche können beispielsweise zu den Beleuchtungsbereichen ausgerichtet angeordnet sein, d.h. der Erfassungsbereich 131 entspricht im Wesentlichen dem Beleuchtungsbereich 121, der Erfassungsbereich 132 entspricht im Wesentlichen dem Beleuchtungsbereich 122 usw. Jeder der Erfassungsbereiche kann einen vorbestimmten Winkelbereich aufweisen, beispielsweise 10° oder, wie in den Figuren 12 und 13 gezeigt, 20°. Die so gebildeten Segmente können in einem sogenannten Zeitmultiplexverfahren nacheinander abgetastet werden. Da mit den zuvor beschriebenen Entfernungsmessverfahren, insbesondere mit dem frequenzmodulierten Dauerstrichverfahren oder zufälligen Frequenzmodulationsverfahren, Entfernungsmessungen innerhalb eines Segments innerhalb sehr kurzer Zeit, beispielsweise innerhalb von 50 $\mu$sec durchgeführt werden können, kann der gesamte Winkelbereich, welcher von den Segmenten überdeckt wird, in einer sehr kurzen Zeit abgetastet werden. Wenn beispielsweise ein Winkelbereich von 120° in 10°-Segmenten abgetastet werden soll, kann der gesamte Winkelbereich bei einer Messzeit von 50 $\mu$sec pro Segment in 600 $\mu$sec abgetastet werden. Selbst bei einer längeren Messzeit von 500 $\mu$sec kann der gesamte Winkelbereich von 120° in 6 ms abgetastet werden. Typische Anwendungen von Fahrerassistenzsystemen benötigen Messzeiten im Bereich von 30 ms-50 ms, so dass eine ausreichend schnelle Abtastung möglich ist. Die Auflösung der Abtastung kann verbessert werden, indem nicht jedes Winkelsegment mit je einem entsprechenden Sender und Empfänger ausgestattet wird, sonder indem Segmente verwendet werden, welche sich jeweils zur Hälfte überlappen. Fig. 14 zeigt eine derartige Überlappung der Beleuchtungsbereiche 121-127 mit den Erfassungsbereichen 131-136. Sowohl die Beleuchtungsbereiche als auch die Erfassungsbereiche umfassen jeweils einen Winkelbereich von 20°. Durch die versetzte Überlappung der Beleuchtungsbereiche 121-127 mit den Erfassungsbereichen 131-136 ergeben sich zwölf 10°-Segmente, welche mit sieben Lichtquellen und sechs Sensoren abgetastet werden können. die Segmente können nebeneinander angeordnet sein, da mit einem Zeitmultiplexverfahren gearbeitet wird und somit Übersprecher von einem Segment zu einem Nachbarsegment nicht relevant sind. Zu einem Zeitpunkt wird immer nur ein Paar aus Sender und Empfänger betrieben, so dass eindeutig feststellbar ist, in welchem Segment ein Signal auftritt. Anders ausgedrückt überdeckt der erste Erfassungsbereich 131 einen Teilbereich des ersten Beleuchtungsbereichs 121 und einen Teilbereich des zweiten Beleuchtungsbereichs 122. Der zweite Erfassungsbereich 132 umfasst einen weiteren Teilbereich des zweiten Beleuchtungsbereichs 122. Dabei ist der zweite Erfassungsbereich 132 getrennt von dem ersten Beleuchtungsbereich 121.

Aus der zuvor in Verbindung mit den Figuren 12-14 beschriebenen Anordnung von Beleuchtungsbereichen und Erfassungsbereichen kann zusätzlich eine Information für eine Sichtweitenabschätzung gewonnen werden, wenn Erfassungsbereiche, welche einem Beleuchtungsbereich gar nicht zugeordnet sind, gleichzeitig mit ausgewertet werden. Beispielsweise werden für eine Entfernungsmessung die Lichtquelle für den Beleuchtungsbereich 121 und der Sensor für den Erfassungsbereich 131 betrieben. Es ergibt sich ein Messsegment in dem Überlagerungsbereich zwischen dem Beleuchtungsbereich 121 und dem Messbereich 131. Gleichzeitig oder auch in einem Zeitmultiplexverfahren wird ein Sensor abgefragt, welcher dem Erfassungsbereich 136 zugeordnet ist. Wenn auch dieser Sensor ein Entfernungssignal aufgrund des für den Beleuchtungsbereich 121 ausgegebenen Lichts meldet, kann dies nur aus sekundärem Streulicht entstehen. Wenn wie hier bei weit entfernten Beleuchtungsbereichen und Erfassungsbereichen Signale auftreten, handelt es sich um beispielsweise sehr starken Nebel. Sind die Segmente näher zusammen, wenn also beispielsweise der Erfassungsbereich 133 ein Entfernungssignal liefert, so tritt schon bei geringeren Partikeldichten eine messbare Sekundärstreuung auf. Durch Auswertung von unterschiedlich entfernten Bereichen kann der Nebel sehr gut abgestuft bewertet werden. Daraus kann eine aktuelle Sichtweite abgeschätzt werden.

Zur segmentierten Ausleuchtung der Umgebung des Fahrzeugs 10 sind, wie zuvor beschrieben wurde, mehrere Lichtquellen erforderlich. Dazu können beispielsweise mehrere Leuchtdioden von beispielsweise einem Abblendlicht oder insbesondere von einem Tagfahrlicht, welches eine linienartige Struktur aufweist, verwendet werden. Um insbesondere bei einem linienförmigen Tagfahrlicht ein gleichmäßiges Erscheinungsbild zu erreichen, können beispielsweise in dem Tagfahrlicht beabstandet angeordnete Leuchtdioden in Gruppen zusammengeschaltet werden und einen jeweiligen Beleuchtungsbereich ausleuchten. Dazwischen liegende Leuchtdioden können weitere Beleuchtungsbereiche ausleuchten. Anders ausgedrückt kann beispielsweise die erste Lichtquelle, welche zur Erzeugung des Beleuchtungsbereichs 121 verwendet wird, mindestens eine erste Leuchtdiode und eine zweite Leuchtdiode umfassen. Eine zweite Lichtquelle, welche den Beleuchtungsbereich 122 ausleuchtet, kann ebenfalls mindestens eine Leuchtdiode oder mehrere Leuchtdioden umfassen. Die erste und die zweite Leuchtdiode der ersten Lichtquelle und die Leuchtdiode der zweiten Lichtquelle werden in einer Reihe angeordnet, wobei die Leuchtdiode der zweiten Lichtquelle wird zwischen der ersten und zweiten Leuchtdiode der ersten Lichtquelle angeordnet wird. Da die Helligkeit der Leuchtdioden bei der Entfernungsmessung variieren kann, kann durch diese versetzte Anordnung erreicht werden, dass diese Helligkeitsunterschiede von einem Betrachter nicht wahrgenommen werden. Alternativ kann damit aber auch ein gestalterisch interessanter Effekt geschaffen werden, wenn die Helligkeitsunterschiede für einen Betrachter sichtbar sind.

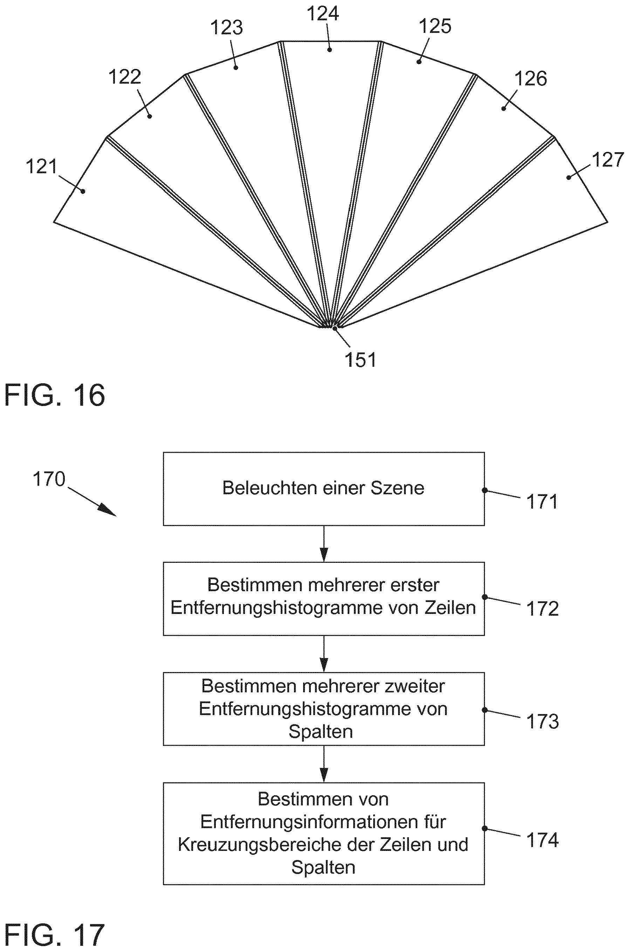

Fig. 15 zeigt ein Nahfeld von Beleuchtungsbereichen aufgrund einer versetzten Anordnung von Leuchtdioden. Ein Leuchtband 151 umfasst 21 Leuchtdioden. Das Leuchtband 151 kann beispielsweise ein Leuchtband eines Tagfahrlichts sein und eine Länge von beispielsweise 42 cm aufweisen. Mit dem Leuchtband 151 werden sieben Beleuchtungsbereiche oder Segmente mit einem Winkel von jeweils 20° ausgeleuchtet. Jedes Segment wird von jeweils drei Leuchtdioden im Abstand von 14 cm erzeugt. In Fig. 15 sind die von den einzelnen Leuchtdioden ausleuchtbaren Segmente dargestellt. Das Fernfeld der durch die Leuchtdioden des Leuchtbandes 151 erzeugten Segmente ist in Fig. 16 dargestellt. Hier sind deutlich die näherungsweise 20° umfassenden Beleuchtungsbereiche 121-127 erkennbar.

Verschiedene Assistenzsysteme eines Fahrzeugs können eine Bildinformation der Umgebung des Fahrzeugs benötigen, welche eine hohe Auflösung einer Abbildung einer Szene vor dem Fahrzeug aus Sicht des Fahrzeugs bereitstellt, wobei jedem Bereich oder Bildpunkt der Bildinformation ein entsprechender Entfernungswert zu einem Gegenstand in diesem Bereich zugeordnet ist. Diese Bildinformation kann erforderlich sein, um beispielsweise Hindernisse oberhalb oder unterhalb eines bestimmten Bereichs detektieren zu können, wie z.B. auf der Fahrbahn befindliche Hindernisse wie Schwellen, die nicht überfahren werden können. Fig. 17 zeigt ein Verfahren 170 zum Bestimmen derartiger Entfernungsinformationen. Im Schritt 171 wird die Szene in der Umgebung des Fahrzeugs beleuchtet. Das Verfahren 170 ist nicht nur außerhalb des Fahrzeugs einsetzbar, sondern auch innerhalb des Fahrzeugs, um beispielsweise Gesten eines Fahrers zu erkennen. Das von der Szene reflektierte Licht wird mit dem Sensor 12 des Fahrzeugs 10 empfangen. Im Schritt 172 werden mehrere erste Entfernungshistogramme in Abhängigkeit von dem empfangenen Licht bestimmt. Einem jeweiligen ersten Entfernungshistogramm der mehreren ersten Entfernungshistogramme ist ein jeweiliger erster streifenförmiger Bereich der Szene zugeordnet. Das erste Entfernungshistogramm umfasst eine Stärke von Reflexionen in einem Entfernungsbereich durch Objekte in dem zugeordneten ersten streifenförmigen Bereich. Im Schritt 173 werden mehrere zweite Entfernungshistogramme in Abhängigkeit von dem empfangenen Licht bestimmt. Einem jeweiligen zweiten Entfernungshistogramm der mehreren zweiten Entfernungshistogramme ist ein jeweiliger zweiter streifenförmiger Bereich der Szene zugeordnet. Das zweite Entfernungshistogramm umfasst eine Stärke von Reflexionen in einem Entfernungsbereich durch Objekte in dem zugeordneten zweiten streifenförmigen Bereich. Im Schritt 174 wird in Abhängigkeit von den mehreren ersten Entfernungshistogrammen und den mehreren zweiten Entfernungshistogrammen für einen Bereich der Szene eine Entfernung bestimmt. Der Bereich der Szene umfasst einen Kreuzungsbereich von einem der ersten streifenförmigen Bereiche mit einem der zweiten streifenförmigen Bereiche. Die ersten streifenförmigen Bereiche sind vorzugsweise entlang ihrer Längsrichtung parallel zueinander und die zweiten streifenförmigen Bereiche sind vorzugsweise entlang ihrer Längsrichtung parallel zueinander. Die Längsrichtung der ersten streifenförmigen Bereiche ist dabei vorzugsweise senkrecht zur Längsrichtung der zweiten streifenförmigen Bereiche. Die ersten streifenförmigen Bereiche können Zeilen der Szene vor dem Fahrzeug oder innerhalb des Fahrzeugs umfassen und die zweiten streifenförmigen Bereiche können Spalten der Szene umfassen. Zum Bestimmen der mehreren ersten Entfernungshistogramme und der mehreren zweiten Entfernungshistogramme kann der Sensor 12 eine Empfängermatrix umfassen, bei welcher Zeilen und Spalten wahlweise zusammengeschaltet werden können, so dass ein Empfangssignal entweder aus der Summe aller Elemente in einer Spalte oder aus der Summe aller Elemente einer Zeile entsteht. Dann können alle Zeilen und Spalten einzeln gemessen werden. Die Entfernungsmessungen können beispielsweise mit einem der zuvor beschriebenen Verfahren durchgeführt werden, indem die Lichtquelle des Fahrzeugs entsprechend moduliert wird und das Empfangssignal aus einer der Zeilen oder Spalten mit dem Sendesignal für die Beleuchtungseinrichtung 11 korreliert oder gemischt wird. Die Empfängermatrix kann beispielsweise 300 Zeilen und 700 Spalten aufweisen, also in Summe 1000 Zeilen und Spalten. Bei einer Messzeit pro Zeile oder Spalte von beispielsweise 50 μsec können diese 1000 Messungen in 50 ms erfolgen. Pro Zeile bzw. Spalte steht nun ein entfernungsaufgelöstes Echogramm, ein sogenanntes Entfernungshistogramm, zur Verfügung. Dies kann mit einem Verfahren ähnlich wie bei einem Computertomographen zu einem pixelaufgelösten Bild verarbeitet werden. Um den Verarbeitungsaufwand zu verringern, kann mit dem gleichen Verfahren ein bestimmter interessierender Bereich ausgewählt werden. Für diesen Bereich werden die entsprechenden Empfangselemente der Empfängermatrix zusammengeschaltet und nur dieser Bereich beobachtet und ausgewertet.

Die Umschaltung zwischen unterschiedlichen auszuwertenden Bereichen ist dynamisch möglich und kann so an verschiedene Fahrsituationen angepasst werden.

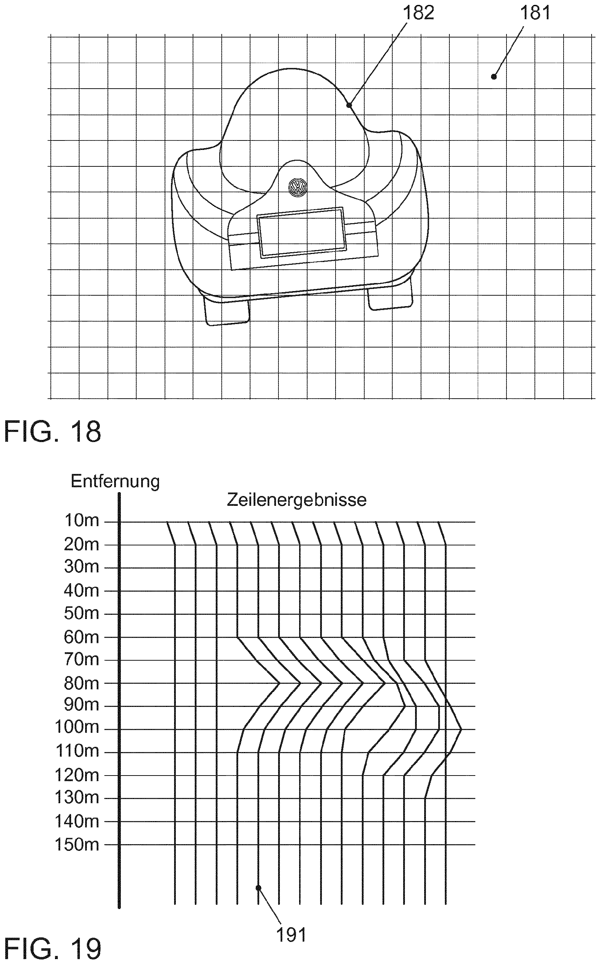

Das zuvor beschriebene Verfahren wird nachfolgend unter Bezugnahme auf die Fig. 18 bis 20 an einem Beispiel beschrieben werden. Fig. 18 zeigt eine Szene in einer Umgebung des Fahrzeugs. Auf einer Fahrbahn 181 befindet sich ein Fahrzeug 182. Die Szene ist matrixförmig in eine Vielzahl von Bereichen unterteilt. In dem in Fig. 18 gezeigten Beispiel ist die Szene in 14 Zeilen und 19 Spalten unterteilt, sodass sich eine Gesamtzahl von 266 Bereichen ergibt. Diese geringe Anzahl von Zeilen und Spalten wurde aus Übersichtlichkeitsgründen in den Fig. 18 bis 20 gewählt. Praktische Implementierungen können beispielsweise mindestens 100 Zeilen und mindestens 200 Spalten, vorzugsweise 300 Zeilen und 700 Spalten aufweisen. Der Sensor 12 umfasst demzufolge vorzugsweise eine Sensormatrix mit einer entsprechenden Zeilen- und Spaltenauflösung. Die Beleuchtungseinrichtung 11 des Fahrzeugs 10 beleuchtet die in Fig. 18 dargestellte Szene vorzugsweise mit einer Leuchtdiodenlichtquelle und eine Auswertung erfolgt mit einem der zuvor beschriebenen Modulationsverfahren, beispielsweise dem frequenzmodulierten Dauerstrichverfahren, dem zufälligen Frequenzmodulationsverfahren, dem Einfrequenzmodulationsverfahren oder dem Pulsmodulationsverfahren. Durch Zusammenschalten der Empfängermatrix in Zeilen oder Spalten werden entfernungsaufgelöste Echogramme für die Zeilen und Spalten erzeugt.

Fig. 19 zeigt entsprechende entfernungsaufgelöste Echogramme für die 14 Zeilen der Szene der Fig. 18. Das Echogramm für die fünfte Zeile von unten der Szene der Fig. 18 soll nachfolgend beispielhaft im Detail beschrieben werden. Das Echogramm für diese fünfte Zeile ist in Fig. 19 mit dem Bezugszeichen 191 gekennzeichnet. Wie aus Fig. 19 ersichtlich ist, weist das Echogramm einen erhöhten Signalpegel im Bereich von 60 bis 110 Metern auf. Umgekehrt ist im Bereich von 10 bis 60 Metern und im Bereich von 110 bis 150 Meter im Wesentlichen kein Signalpegel vorhanden. Dies bedeutet, dass sich in der fünften Spalte mindestens ein Objekt im Bereich von 60 bis 110 m befindet. Es können jedoch mehrere Objekte in diesem Bereich vorhanden sein. Wo sich das Objekt in der horizontalen Richtung befindet, also in welchem Spaltenbereich sich das Objekt befindet, ist aus dem Echogramm der Fig. 19 nicht ersichtlich.

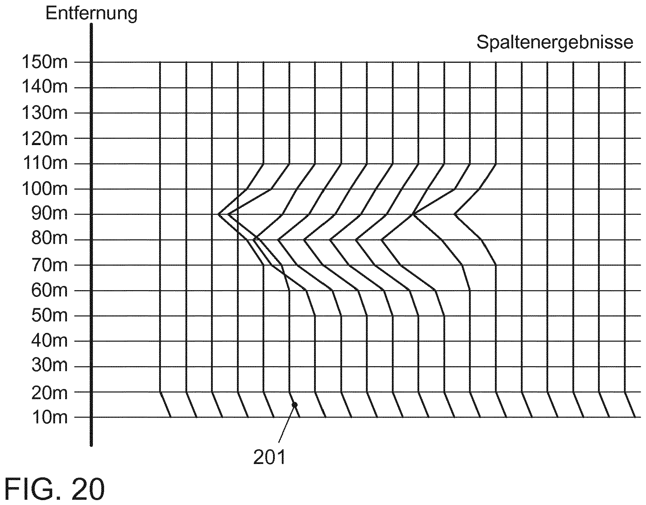

Fig. 20 zeigt entsprechende Echogramme für die 19 Spalten der Szenen der Fig. 18. Beispielhaft sei in diesem Zusammenhang auf die Spalte 6 von links der Fig. 18 verwiesen, welche in der Fig. 20 mit dem Bezugszeichen 201 gekennzeichnet ist. Das Echogramm 201 der sechsten Spalte zeigt an, dass sich im Bereich von 60 bis 110 Metern Entfernung ein Objekt oder mehrere Objekte befinden. Das Echogramm der Spalten enthält wiederum keine Informationen über die Verteilung der Objekte innerhalb der Spalte.

Aus der Gesamtheit der Echogramme kann für jeden der 266 einzelnen Bereiche der Szene der Fig. 18 eine entsprechende Entfernungsinformation zu Objekten in der Szene bestimmt werden. Eine bereichsspezifische Information kann beispielsweise mit Hilfe einer zweidimensionalen Fourier-Transformation aus den entfernungsaufgelösten Echogrammen der Zeilen und Spalten gewonnen werden.

Die entfernungsaufgelösten Echogramme in den Fig. 19 und 20 sind dimensionslos und können beispielsweise eine relative Größe anzeigen, welche anzeigt, wie viel Prozent des zeilen- bzw. spaltenförmigen Flächenbereichs eine jeweilige Entfernung zu dem Fahrzeug aufweist.

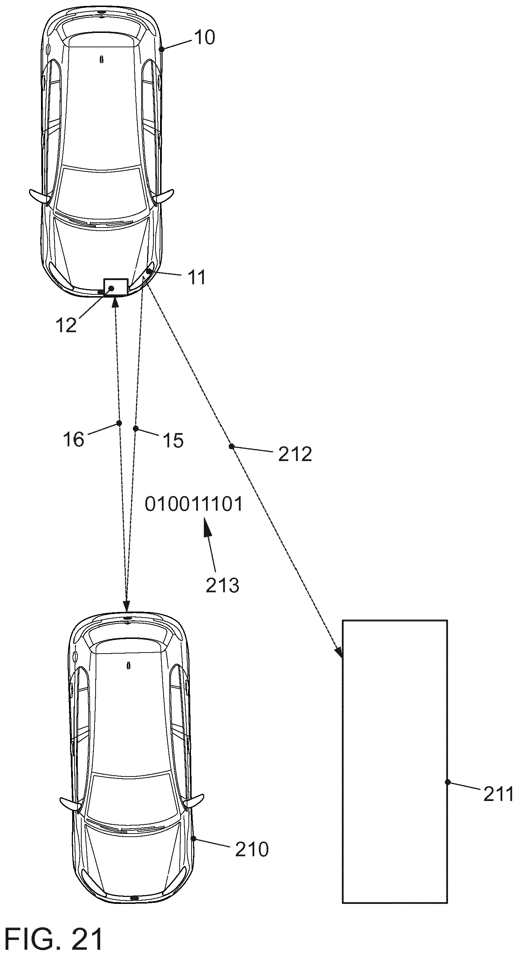

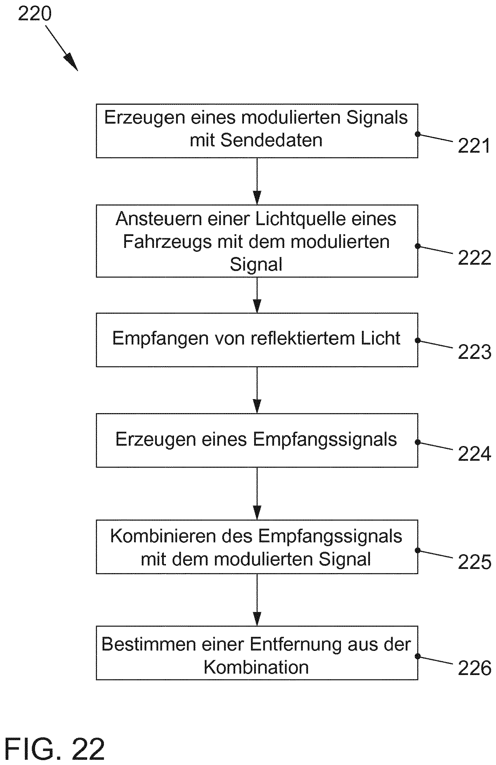

Sowohl bei der Pulsmodulation als auch bei dem zufälligen Frequenzmodulationsverfahren (RFM) ist es möglich, in das ausgesendete Signal 15 eine Information einzukodieren, die von einem Empfänger dekodiert werden kann. Diese Information kann beispielsweise für eine Kommunikation zwischen Fahrzeugen, eine sogenannte Car-to-Car Kommunikation oder für eine Kommunikation zwischen dem Fahrzeug 10 und einem Infrastrukturobjekt, beispielsweise einer Ampel oder einem Verkehrsleitsystem, verwendet werden. Fig. 22 zeigt ein Verfahren 220, mit welchem digitale Informationen gleichzeitig mit einer Entfernungsmessung übertragen werden können. Fig. 21 zeigt das Fahrzeug 10 sowie ein weiteres Fahrzeug 210 und ein Infrastrukturobjekt 211. Mit dem in Fig. 22 beschriebenen Verfahren 220 kann gleichzeitig eine Entfernung zwischen den Fahrzeugen 10 und 210 gemessen werden und eine Information, insbesondere eine digitale Information, an das Fahrzeug 210 oder das Infrastrukturobjekt 211 übertragen werden.

Im Schritt 221 wird ein moduliertes Signal in Abhängigkeit von Sendedaten, welche von dem Fahrzeug 10 zu senden sind, erzeugt. Im Schritt 222 wird die Lichtquelle 11 des Fahrzeugs 10 mit dem modulierten Signal angesteuert. Im Schritt 223 wird Licht 16, welches als Licht 15 von der Lichtquelle 11 abgegeben wurde und von dem Fahrzeug 210 oder einem anderen Objekt in der Umgebung des Fahrzeugs 10 reflektiert wurde, empfangen. Im Schritt 224 wird ein Empfangssignal in Abhängigkeit von dem empfangen Licht erzeugt. Das Empfangssignal kann beispielsweise ein analoges elektrisches Signal oder ein digitales Signal umfassen. Im Schritt 225 wird das Empfangssignal mit dem modulierten Signal kombiniert, beispielsweise mit Hilfe des zuvor beschriebenen Korrelationsverfahrens, und im Schritt 226 wird aus einem Kombinationssignal dieser Kombination die Entfernung zwischen dem Fahrzeug 10 und dem Fahrzeug 210 bestimmt. Das Modulationsverfahren zum Erzeugen des modulierten Signals kann insbesondere ein zufälliges Frequenzmodulationsverfahren oder ein Pulsmodulationsverfahren umfassen. Bei dem Frequenzmodulationsverfahren wird eine Modulationsfrequenz in Abhängigkeit von den Sendedaten geändert. Bei dem Pulsmodulationsverfahren wird ein Pulsabstand oder eine Pulslänge in Abhängigkeit von den Sendedaten geändert. Das modulierte Signal kann zusätzlich in Abhängigkeit von zufälligen Daten erzeugt werden.

Die Daten, welche von dem Fahrzeug 10 zu senden sind, werden somit in der Modulation des Sendesignals übertragen. Beispielsweise kann, wie in Fig. 21 gezeigt ist, eine Bitfolge 213 mit Hilfe des modulierten Sendesignals von dem Fahrzeug 10 sowohl an das vorausfahrende Fahrzeug 210 als auch an das Infrastrukturobjekt 211 übertragen werden, wie es durch die Lichtausbreitungspfeile 15 und 212 gezeigt wird. Empfänger in dem Fahrzeug 210 bzw. in dem Infrastrukturobjekt 211 können das modulierte Sendesignal empfangen, demodulieren und so die Sendedaten 213 zurückgewinnen und weiterverarbeiten. Das Einkodieren der Sendedaten 213 in das modulierte Sendesignal wird nachfolgend im Detail beispielhaft für ein Pulsmodulationsverfahren und ein zufälliges Frequenzmodulationsverfahren (RFM) beschrieben werden.

Bei dem Pulsmodulationsverfahren werden Lichtimpulse mit einer Pulswiederholungsrate gesendet. Diese ist typischerweise lang verglichen mit der Pulslänge der Lichtimpulse. Da es für die Entfernungsmessung ungünstig sein kann, wenn die Pulswiederholungsrate konstant ist, kann der Abstand zwischen den Pulsen in einem gewissen Bereich variiert werden, um beispielsweise Schwebungszustände zu vermeiden. Um Daten zu übertragen kann beispielsweise diese Variation des Abstands zwischen den Pulsen in einen statischen Anteil und in einen systematischen Anteil unterteilt werden. Beispielsweise können Pulse mit einer Länge von 50 nsec und einer Pulswiederholungsrate von 25 kHz, d.h. 40 $\mu$sec, verwenden. Um eine Entfernung im Bereich von beispielsweise bis zu 250 m zu messen, sollte ein Pulsabstand von 250 m x 6,6 nsec/m x 2 = 3,3 $\mu$sec nicht unterschritten werden. Somit ist es möglich, den Pulsabstand zwischen 3,3 $\mu$sec und 76 $\mu$sec zu variieren. Bei einem System mit einer Laufzeitentfernungsmessung und einem Basistiming von 25 snec ergeben sich 2.936 Variationsmöglichkeiten. Davon können beispielsweise 512 benutzt werden, um 9 Bits zu übertragen. Davon können beispielsweise 6 Bits die zu übersendenden Sendedaten umfassen und die übrigen 3 Bits können statistisch variiert werden. Somit schwankt der Abstand zwischen den Pulsen um 12,8 $\mu$sec von 33,6 bis 46,6 $\mu$sec. Somit können alle 40 $\mu$sec 6 Bits Sendedaten übertragen werden, wodurch eine Nettodatenrate von 150 Kbit/sec erreicht wird.

Bei der zufälligen Frequenzmodulation (RFM) können beispielsweise Frequenzen von 10 MHz bis 100 MHz innerhalb von 40 $\mu$sec variiert werden. Bei einem zufälligen Frequenzmodulationsverfahren ohne Datenübertragung werden aus diesem Frequenzband zufällig statisch mehrere Frequenzen ausgewählt, welche dann nacheinander moduliert werden und so einen Frequenzzug ergeben, welcher signifikant für die Messung ist. Für die Übertragung der Sendedaten wird die Frequenzauswahl nicht mehr zufällig durchgeführt, sondern umfasst zumindest einen systematischen Anteil. Beispielsweise können aus dem Band von 10 bis 100 MHz Frequenzen in Frequenzschritten von 10 kHz synthetisiert werden. Somit sind 9.000 unterschiedliche Frequenzen möglich. Davon können beispielsweise wiederum 512 als signifikante Frequenzen benutzt werden, sodass sich ein Frequenzabstand von ca. 175 kHz für jede Information ergibt. Ein typischer Frequenzmodulationsempfänger kann problemlos Frequenzen von 50 kHz unterscheiden, sodass die übertragenen Informationen leicht dekodiert werden können, wenn ein Frequenzabstand von 50 kHz oder mehr eingehalten werden wird. Für die zufällige Variation zur Reduzierung von Störeinflüssen verbleiben noch 125 kHz bzw. $\pm$ 62,5 kHz.

**Bezugszeichenliste**

| | |
|---|---|
| 10 | Fahrzeug |
| 11 | Lichtquelle |
| 12 | Optischer Sensor |
| 13 | Verarbeitungseinheit |
| 14 | Fahrerassistenzsystem |
| 15 | Licht |

| | |
|---|---|
| 16 | Reflektiertes Licht |
| 17 | Objekt |
| 18 | Entfernung |
| 20 | Verfahren |
| 21-25 | Schritt |
| 30 | Verfahren |
| 31-35 | Schritt |
| 40 | Leuchtdiodenlichtquelle |
| 41 | Leuchtdiode |
| 42 | Schaltelement |
| 43 | Energiespeicherelement |
| 44 | Moduliertes Signal |
| 45 | Masseanschluss |
| 46 | Stromversorgungsanschluss |
| 47 | Erster Anschluss |
| 48 | Zweiter Anschluss |
| 50-52 | Verbindungen |
| 54 | Gehäuse |
| 60 | Verfahren |
| 61-67 | Schritt |
| 71, 72 | Erfassungsbereich |
| 81-84 | Erfassungsbereich |
| 121-127 | Beleuchtungsbereich |
| 131-136 | Erfassungsbereich |
| 151 | Leuchtband |
| 170 | Verfahren |
| 171-174 | Schritt |
| 181 | Fahrbahn |
| 182 | Fahrzeug |
| 191 | Echogramm |
| 201 | Echogramm |
| 210 | Fahrzeug |
| 211 | Infrastrukturobjekt |
| 212 | Lichtausbereitungspfeil |
| 213 | Sendedaten |
| 220 | Verfahren |
| 221-226 | Schritt |

**Patentansprüche**

1. Verfahren für ein Fahrzeug, umfassend:

   - Erfassen eines Betriebszustands des Fahrzeugs (10),
   - Ansteuern einer Beleuchtungseinrichtung (11) des Fahrzeugs (10) in Abhängigkeit von einem modulierten Signal, wobei die Beleuchtungseinrichtung (11) zum Beleuchten einer Szene in einer Umgebung des Fahrzeugs (10) oder innerhalb des Fahrzeugs (10) ausgestaltet ist,
   - Empfangen von Licht (16), welches von der Beleuchtungseinrichtung (11) abgegeben wurde und von einem Objekt (17) in der Szene reflektiert wurde,
   - Erzeugen eines Empfangsignals in Abhängigkeit von dem empfangenen Licht (16), und
   - Bestimmen einer Entfernungsinformation (18) des Objekts (17) in Abhängigkeit von dem modulierten Signal und dem Empfangssignal,

   **dadurch gekennzeichnet,**
   **dass** das Erfassen des Betriebszustands des Fahrzeugs (10) ein Bestimmen eines Sollzustands für die Beleuchtungseinrichtung (11) des Fahrzeugs (10) umfasst, wobei der Sollzustand anzeigt, ob die Beleuchtungseinrichtung (11) eingeschaltet oder ausgeschaltet sein soll, und dass das Verfahren ferner umfasst:

- Erzeugen des modulierten Signals in Abhängigkeit von dem Betriebszustand, wobei das Erzeugen des modulierten Signals umfasst:
  - Erzeugen eines ersten modulierten Signals, wenn der Sollzustand anzeigt, dass die Beleuchtungseinrichtung (11) eingeschaltet sein soll, und
  - Erzeugen eines zweiten modulierten Signals, wenn der Sollzustand anzeigt, dass die Beleuchtungseinrichtung (11) ausgeschaltet sein soll,

wobei das erste modulierte Signal dem invertierten zweiten modulierten Signal entspricht,

indem das erste modulierte Signal in kurzen ausgeschalteten Zeitabschnitten oder Impulsen, in denen die Beleuchtungseinrichtung ausgeschaltet wird, und das zweite modulierte Signal in kurzen Lichtpulsen, in denen die Beleuchtungseinrichtung eingeschaltet wird, besteht, wobei die kurzen ausgeschalteten Zeitabschnitte oder Impulse so hinreichend kurz sind, dass ein Beobachter nicht bemerkt, dass das Licht der Beleuchtungseinrichtung kurzzeitig ausgeschaltet wird, und wobei die kurzen Lichtimpulse eine so geringe mittlere Lichtleistung haben, dass ein Beobachter diese Lichtmenge nicht wahrnehmen kann.

2. Verfahren nach Anspruch 1, **dadurch gekennzeichnet, dass** das Erfassen des Betriebszustands des Fahrzeugs (10) umfasst:

   - Bestimmen einer Umgebungshelligkeit in der Umgebung und/oder innerhalb des Fahrzeugs (10), und/oder
   - Bestimmen eines Entfernungsmessbereichs, für welchen die Entfernungsinformation (18) zu bestimmen ist.

3. Verfahren nach einem der vorhergehenden Ansprüche, **dadurch gekennzeichnet, dass** das Verfahren ferner umfasst:

   - Ansteuern einer weiteren Beleuchtungseinrichtung des Fahrzeugs (10) in Abhängigkeit von dem Betriebszustand und dem modulierten Signal.

4. Verfahren nach einem der vorhergehenden Ansprüche, **dadurch gekennzeichnet, dass** das Erzeugen des modulierten Signals ein Einstellen einer Durchschnittsleistung des modulierten Signals umfasst.

5. Verfahren nach einem der vorhergehenden Ansprüche, **dadurch gekennzeichnet, dass** das modulierte Signal ein pulsmoduliertes Signal umfasst.

6. Verfahren nach Anspruch 5, **dadurch gekennzeichnet, dass** das pulsmodulierte Signal eine Pulsdauer im Bereich von 1 bis 500 ns, vorzugsweise 10 bis 100 ns, und eine Frequenz im Bereich von 1 bis 1000 Hz, vorzugsweise 10 bis 100 Hz, aufweist.

7. Vorrichtung zur Bestimmung einer Entfernungsinformation für ein Fahrzeug, umfassend:

   - einen Sensor (12) zum Empfangen von Licht (16), welches von einer Beleuchtungseinrichtung (11) des Fahrzeugs (10) abgegeben wurde und von einem Objekt (17) in einer Szene in einer Umgebung des Fahrzeugs (10) oder innerhalb des Fahrzeugs (10) reflektiert wurde, und zum Erzeugen eines Empfangssignals in Abhängigkeit von dem empfangenen Licht (16), und
   - eine Verarbeitungseinheit (13), welche ausgestaltet ist,

einen Betriebszustand des Fahrzeugs (10) zu erfassen,
die Beleuchtungseinrichtung (11) des Fahrzeugs (10) in Abhängigkeit von einem modulierten Signal anzusteuern, wobei die Beleuchtungseinrichtung (11) zum Beleuchten der Szene ausgestaltet ist, und
eine Entfernungsinformation (18) des Objekts (17) in Abhängigkeit von dem modulierten Signal und dem Empfangssignal zu bestimmen,
**dadurch gekennzeichnet,**
**dass** das Erfassen des Betriebszustands des Fahrzeugs (10) ein Bestimmen eines Sollzustands für die Beleuchtungseinrichtung (11) des Fahrzeugs (10) umfasst, wobei der Sollzustand anzeigt, ob die Beleuchtungseinrichtung (11) eingeschaltet oder ausgeschaltet sein soll, und dass die Verarbeitungseinheit (13) ferner ausgestaltet ist,
das modulierte Signal in Abhängigkeit von dem Betriebszustand zu erzeugen, wobei

ein erstes moduliertes Signal erzeugt wird, wenn der Sollzustand anzeigt, dass die Beleuchtungseinrichtung (11) eingeschaltet sein soll, und

ein zweites moduliertes Signal erzeugt wird, wenn der Sollzustand anzeigt, dass die Beleuchtungseinrichtung (11) ausgeschaltet sein soll,

wobei das erste modulierte Signal dem invertierten zweiten modulierten Signal entspricht, indem das erste modulierte Signal in kurzen ausgeschalteten Zeitabschnitten oder Impulsen, in denen die Beleuchtungseinrichtung ausgeschaltet wird, und das zweite modulierte Signal in kurzen Lichtpulsen, in denen die Beleuchtungseinrichtung eingeschaltet wird, besteht, wobei die kurzen ausgeschalteten Zeitabschnitte oder Impulse so hinreichend kurz sind, dass ein Beobachter nicht bemerkt, dass das Licht der Beleuchtungseinrichtung kurzzeitig ausgeschaltet wird, und wobei die kurzen Lichtimpulse eine so geringe mittlere Lichtleistung haben, dass ein Beobachter diese Lichtmenge nicht wahrnehmen kann.

8. Vorrichtung nach Anspruch 7, **dadurch gekennzeichnet, dass** die Vorrichtung zur Durchführung des Verfahrens nach einem der Ansprüche 1-6 ausgestaltet ist.

9. Fahrzeug umfassend:

- eine Vorrichtung nach Anspruch 7 oder 8,
- die Beleuchtungseinrichtung (11) zum Beleuchten der Szene in der Umgebung oder innerhalb des Fahrzeugs (10), und
- ein Fahrerassistenzsystem (14),

wobei die Vorrichtung mit dem Fahrerassistenzsystem (14) und der Beleuchtungseinrichtung (11) gekoppelt ist.

**Claims**

1. Method for a vehicle, comprising:

- detecting an operating state of the vehicle (10),
- actuating a lighting device (11) of the vehicle (10) depending on a modulated signal, wherein the lighting device (11) is configured for illuminating a scene in surroundings of the vehicle (10) or within the vehicle (10),
- receiving light (16) which was emitted by the lighting device (11) and was reflected by an object (17) in the scene,
- generating a reception signal depending on the received light (16), and
- determining distance information (18) of the object (17) depending on the modulated signal and the reception signal,

**characterized**
**in that** detecting the operating state of the vehicle (10) comprises determining a setpoint state for the lighting device (11) of the vehicle (10), wherein the setpoint state indicates whether the lighting device (11) is intended to be switched on or switched off, and in that the method furthermore comprises:

- generating the modulated signal depending on the operating state, wherein generating the modulated signal comprises:
- generating a first modulated signal if the setpoint state indicates that the lighting device (11) is intended to be switched on, and
- generating a second modulated signal if the setpoint state indicates that the lighting device (11) is intended to be switched off,

wherein the first modulated signal corresponds to the inverted second modulated signal by virtue of the fact that the first modulated signal consists in short switched-off time segments or pulses in which the lighting device is switched off and the second modulated signal consists in short light pulses in which the lighting device is switched on, wherein the short switched-off time segments or pulses are sufficiently short such that an observer does not notice that the light of the lighting device is momentarily switched off, and wherein the short light pulses have such a low average light power that an observer cannot perceive this quantity of light.

2. Method according to Claim 1, **characterized in that** detecting the operating state of the vehicle (10) comprises:

- determining an ambient brightness in the surroundings and/or within the vehicle (10), and/or

- determining a distance measurement range for which the distance information (18) is to be determined.

3. Method according to either of the preceding claims, **characterized in that** the method furthermore comprises:

- actuating a further lighting device of the vehicle (10) depending on the operating state and the modulated signal.

4. Method according to any of the preceding claims, **characterized in that** generating the modulated signal comprises setting an average power of the modulated signal.

5. Method according to any of the preceding claims, **characterized in that** the modulated signal comprises a pulse-modulated signal.

6. Method according to Claim 5, **characterized in that** the pulse-modulated signal has a pulse duration in the range of 1 to 500 ns, preferably 10 to 100 ns, and a frequency in the range of 1 to 1000 Hz, preferably 10 to 100 Hz.

7. Apparatus for determining distance information for a vehicle, comprising:

- a sensor (12) for receiving light (16) which was emitted by a lighting device (11) of the vehicle (10) and was reflected by an object (17) in a scene in surroundings of the vehicle (10) or within the vehicle (10), and for generating a reception signal depending on the received light (16), and
- a processing unit (13) configured

to detect an operating state of the vehicle (10),
to actuate the lighting device (11) of the vehicle (10) depending on a modulated signal, wherein the lighting device (11) is configured for illuminating the scene, and
to determine distance information (18) of the object (17) depending on the modulated signal and the reception signal, **characterized
in that** detecting the operating state of the vehicle (10) comprises determining a setpoint state for the lighting device (11) of the vehicle (10), wherein the setpoint state indicates whether the lighting device (11) is intended to be switched on or switched off, and in that the processing unit (13) is furthermore configured
to generate the modulated signal depending on the operating state, wherein
a first modulated signal is generated if the setpoint state indicates that the lighting device (11) is intended to be switched on, and
a second modulated signal is generated if the setpoint state indicates that the lighting device (11) is intended to be switched off,
wherein the first modulated signal corresponds to the inverted second modulated signal by virtue of the fact that the first modulated signal consists in short switched-off time segments or pulses in which the lighting device is switched off and the second modulated signal consists in short light pulses in which the lighting device is switched on, wherein the short switched-off time segments or pulses are sufficiently short such that an observer does not notice that the light of the lighting device is momentarily switched off, and wherein the short light pulses have such a low average light power that an observer cannot perceive this quantity of light.

8. Apparatus according to Claim 7, **characterized in that** the apparatus is configured for carrying out the method according to any of Claims 1-6.

9. Vehicle comprising:

- an apparatus according to Claim 7 or 8,
- the lighting device (11) for illuminating the scene in the surroundings of or within the vehicle (10), and
- a driver assistance system (14),

wherein the apparatus is coupled to the driver assistance system (14) and the lighting device (11).

**Revendications**

1. Procédé destiné à un véhicule, comprenant :

- la détection d'un état de fonctionnement du véhicule (10),
- la commande d'un dispositif d'éclairage (11) du véhicule (10) en fonction d'un signal modulé, dans lequel le dispositif d'éclairage (11) est conçu pour éclairer une scène dans un environnement du véhicule (10) ou à l'intérieur du véhicule (10),
- la réception de la lumière (16) ayant été émise par le dispositif d'éclairage (11) et ayant été réfléchie par un objet (17) dans la scène,
- la génération d'un signal de réception en fonction de la lumière (16) reçue, et
- la détermination d'une information de distance (18) de l'objet (17) en fonction du signal modulé et du signal de réception,

**caractérisé en ce que** la détection de l'état de fonctionnement du véhicule (10) comprend une détermination d'un état théorique pour le dispositif d'éclairage (11) du véhicule (10), dans lequel l'état théorique indique si le dispositif d'éclairage (11) doit être activé ou désactivé, et **en ce que** le procédé comprend en outre :

- la génération du signal modulé en fonction de l'état de fonctionnement, dans lequel la génération du signal modulé comprend :
- la génération d'un premier signal modulé lorsque l'état théorique indique que le dispositif d'éclairage (11) doit être activé, et
- la génération d'un second signal modulé lorsque l'état théorique indique que le dispositif d'éclairage (11) doit être désactivé,

dans lequel le premier signal modulé correspond au second signal modulé inversé en faisant en sorte que le premier signal modulé soit constitué de courts intervalles de temps ou impulsions de désactivation lors desquels le dispositif d'éclairage est désactivé et que le second signal modulé soit constitué de courtes impulsions lumineuses lors desquelles le dispositif d'éclairage est activé, dans lequel les courts intervalles de temps ou impulsions de désactivation sont suffisamment courts pour qu'un observateur ne remarque pas que la lumière du dispositif d'éclairage est désactivée pendant un court instant, et dans lequel les courtes impulsions lumineuses présentent une puissance lumineuse moyenne suffisamment faible pour qu'un observateur ne puisse pas déceler cette quantité de lumière.

2. Procédé selon la revendication 1, **caractérisé en ce que** la détection de l'état de fonctionnement du véhicule (10) comprend :

- la détermination d'une luminosité ambiante dans l'environnement et/ou à l'intérieur du véhicule (10), et/ou
- la détermination d'une zone de mesure de distance pour laquelle l'information de distance (18) doit être déterminée.

3. Procédé selon l'une des revendications précédentes, **caractérisé en ce que** le procédé comprend en outre :

- la commande d'un autre dispositif d'éclairage du véhicule (10) en fonction de l'état de fonctionnement et du signal modulé.

4. Procédé selon l'une des revendications précédentes, **caractérisé en ce que** la génération du signal modulé comprend un réglage d'une puissance moyenne du signal modulé.

5. Procédé selon l'une des revendications précédentes, **caractérisé en ce que** le signal modulé comprend un signal modulé en impulsion.

6. Procédé selon la revendication 5, **caractérisé en ce que** le signal modulé en impulsion présente une durée d'impulsion se situant dans la plage de 1 à 500 ns, de préférence de 10 à 100 ns, et une fréquence se situant dans la plage de 1 à 1000 Hz, de préférence de 10 à 100 Hz.

7. Dispositif destiné à déterminer une information de distance pour un véhicule, comprenant :

- un capteur (12) destiné à recevoir de la lumière (16) ayant été émise par un dispositif d'éclairage (11) du véhicule et ayant été réfléchie par un objet (17) dans une scène dans un environnement du véhicule (10) ou à l'intérieur du véhicule (10), et à générer un signal de réception en fonction de la lumière (16) reçue, et
- une unité de traitement (13) qui est conçue pour détecter un état de fonctionnement du véhicule (10), commander le dispositif d'éclairage (11) du véhicule (10) en fonction d'un signal modulé, dans lequel le dispositif d'éclairage (11) est conçu pour éclairer la scène, et

déterminer une information de distance (18) de l'objet (17) en fonction du signal modulé et du signal de réception, **caractérisé en ce que** la détection de l'état de fonctionnement du véhicule (10) comprend une détermination d'un état théorique du dispositif d'éclairage (11) du véhicule (10), dans lequel l'état théorique indique si le dispositif d'éclairage (11) doit être activé ou désactivé, et **en ce que** l'unité de traitement (13) est en outre conçue pour générer le signal modulé en fonction de l'état de fonctionnement, dans lequel

un premier signal modulé est généré lorsque l'état théorique indique que le dispositif d'éclairage (11) doit être activé, et un second signal modulé est généré lorsque l'état théorique indique que le dispositif d'éclairage (11) doit être désactivé,

dans lequel le premier signal modulé correspond au second signal modulé inversé en faisant en sorte que le premier signal modulé soit constitué de courts intervalles de temps ou impulsions de désactivation lors desquels le dispositif d'éclairage est désactivé, et que le second signal modulé soit constitué de courtes impulsions lumineuses lors desquelles le dispositif d'éclairage est activé, dans lequel les courts intervalles de temps ou impulsions de désactivation sont suffisamment courts pour qu'un observateur ne remarque pas que le dispositif d'éclairage est désactivé pendant un court instant, et dans lequel les courtes impulsions lumineuses présentent une puissance lumineuse moyenne suffisamment faible pour qu'un observateur ne puisse pas déceler cette quantité de lumière.

8. Dispositif selon la revendication 7, **caractérisé en ce que** le dispositif destiné à mettre en oeuvre le procédé est conçu selon l'une des revendications 1-6.

9. Véhicule comprenant :

- un dispositif selon la revendication 7 ou 8,
- le dispositif d'éclairage (11) destiné à éclairer la scène dans l'environnement ou à l'intérieur du véhicule (10), et
- un système d'assistance à la conduite (14),

dans lequel le dispositif est couplé au système d'assistance à la conduite (14) et au dispositif d'éclairage (11).

FIG. 1

20

```
┌─────────────────────────────────┐
│  Ansteuern einer Lichtquelle    │
│  eines Fahrzeugs mit einem      │ ── 21
│  modulierten Signal             │
└─────────────────────────────────┘
                │
                ▼
┌─────────────────────────────────┐
│  Empfangen von reflektiertem    │ ── 22
│  Licht                          │
└─────────────────────────────────┘
                │
                ▼
┌─────────────────────────────────┐
│  Erzeugen eines Empfangssignals │ ── 23
└─────────────────────────────────┘
                │
                ▼
┌─────────────────────────────────┐
│  Kombinieren des Empfangssignals│ ── 24
│  mit dem modulierten Signal     │
└─────────────────────────────────┘
                │
                ▼
┌─────────────────────────────────┐
│  Bestimmen einer Entfernung aus │ ── 25
│  der Kombination                │
└─────────────────────────────────┘
```

# FIG. 2

30

| Ansteuern einer Lichtquelle eines Fahrzeugs mit einem FMCW-Signal | — 31 |

| Empfangen von reflektiertem Licht | — 32 |

| Erzeugen eines Empfangssignals | — 33 |

| Mischen des Empfangssignals und des FMCW- Signals | — 34 |

| Bestimmen einer Geschwindigkeit aus dem Mischsignal | — 35 |

# FIG. 3

40

Vcc — 46

moduliertes Signal — 44

45

GND — 45

42

47

43

48

41

# FIG. 4

FIG. 5

60

| Bestimmen eines Betriebszustands des Fahrzeugs | 61 |

| Erzeugen eines Sendesignals abhängig von dem Betriebszustand | 62 |

| Ansteuern der Beleuchtungseinrichtung mit dem Sendesignal | 63 |

| Empfangen von reflektiertem Licht | 64 |

| Erzeugen eines Empfangssignals | 65 |

| Kombinieren des Empfangssignals und des Sendesignals | 66 |

| Bestimmen einer Entfernung aus der Kombination | 67 |

FIG. 6

FIG. 7

FIG. 8

FIG. 9

FIG. 10

FIG. 11

FIG. 12

FIG. 13

FIG. 14

FIG. 15

123 124 125

122 126

121 127

151

FIG. 16

170

| Beleuchten einer Szene | 171 |

| Bestimmen mehrerer erster Entfernungshistogramme von Zeilen | 172 |

| Bestimmen mehrerer zweiter Entfernungshistogramme von Spalten | 173 |

| Bestimmen von Entfernungsinformationen für Kreuzungsbereiche der Zeilen und Spalten | 174 |

FIG. 17

182  181

FIG. 18

Entfernung

Zeilenergebnisse

10m
20m
30m
40m
50m
60m
70m
80m
90m
100m
110m
120m
130m
140m
150m

191

FIG. 19

Entfernung

Spaltenergebnisse

150m
140m
130m
120m
110m
100m
90m
80m
70m
60m
50m
40m
30m
20m
10m

201

FIG. 20

FIG. 21

220

| Erzeugen eines modulierten Signals mit Sendedaten | 221 |

↓

| Ansteuern einer Lichtquelle eines Fahrzeugs mit dem modulierten Signal | 222 |

↓

| Empfangen von reflektiertem Licht | 223 |

↓

| Erzeugen eines Empfangssignals | 224 |

↓

| Kombinieren des Empfangssignals mit dem modulierten Signal | 225 |

↓

| Bestimmen einer Entfernung aus der Kombination | 226 |

# FIG. 22

**IN DER BESCHREIBUNG AUFGEFÜHRTE DOKUMENTE**

**In der Beschreibung aufgeführte Patentdokumente**

- WO 2008154736 A1
- EP 1162478 A1
- US 20080237445 A1
- DE 19707936 A1